# EUROPÄISCHE PATENTSCHRIFT

(11) **EP 2 194 553 B1**
(45) Veröffentlichungstag und Bekanntmachung des Hinweises auf die Patenterteilung: **13.03.2019**
(21) Anmeldenummer: 09013868.6
(22) Anmeldetag: 04.11.2009
(51) Int. Cl.: H01H 43/00, H05B 37/02

(54) **Stromsparende Sensorschaltung**
Energy efficient sensor switch
Commutateur de capteur à économie d'énergie

(30) Priorität: 12.11.2008 DE 102008057042
(43) Veröffentlichungstag der Anmeldung: 09.06.2010
(73) Patentinhaber: Stach, Waldemar, 94363 Oberschneiding (DE)
(72) Erfinder: Stach, Waldemar, 94363 Oberschneiding (DE)
(74) Vertreter: advotec.

(56) Entgegenhaltungen:
- EP-A1- 1 538 579
- WO-A1-2008/102147
- DE-A1- 4 204 462
- DE-A1- 19 825 657

## Beschreibung

Die Erfindung betrifft eine stromsparende Sensorschaltung, die zumindest einen Sensor, einen manuell betätigbaren Schalter oder Taster, einen Stromstoßschalter und mindestens einen an einer Verbraucherphase angeschlossenen Verbraucher aufweist.

Aus dem Stand der Technik sind gattungsgleiche Sensorschaltungen bekannt. Beispielsweise werden Bewegungsmelder in großer Zahl mit vielfältigen Überwachungsaufgaben eingesetzt, an denen ein oder mehrere Verbraucher angeschlossen sind und die zum manuellen Einschalten des Verbrauchers einen Taster in der Sensornetzphase geschaltet haben. Bewegungsmelder haben typischerweise die Eigenschaft, nach dem Einschalten der Sensornetzphase und einer kurzen Verzögerungsphase die Sensorverbraucherphase einzuschalten, also im aktivierten Zustand eingeschaltet zu werden. Erst nach einer längeren Zeit, während der sie keine Bewegung registrieren, schalten die aus dem Stand der Technik bekannten Bewegungsmelder die Sensorschaltphase ab.

Die DE 42 04 462 A1, Die EP 1 538 579 A1 sowie die WO 2008/102147 A1 zeigen Beispiele solcher bekannter Schaltungen. In **Fig. 1** sind beispielhaft verschiedene Schaltungen mit Bewegungssensoren dargestellt. Dabei sind die Bewegungssensoren im Allgemeinen als PIR-Sensoren (Passiv-Infrarot-Sensoren) ausgeführt. Diese können anhand von Infrarotstrahlung Bewegungen erkennen. Daneben basieren Bewegungsmelder auch auf elektromagnetischen Wellen (Dopplerradar) oder auf Ultraschall (Ultraschall-Bewegungsmelder) und werden somit aktiv, d.h. mit eigener Strahlungsquelle betrieben. Im einfachsten Fall sind solche Sensoren mit einer Sensorphase permanent an eine Netzphase angeschlossen und über eine Sensorschaltphase mit einem oder mehreren Verbrauchern verbunden, die wiederum mit dem Nullleiter verbunden sind. Registriert ein solcher Sensor eine Bewegung als sensorauslösendes Ereignis, so wird der Verbraucher über die Sensorschaltphase angesteuert und während einer vorbestimmte Zeit, die am Sensor einstellbar ist, mit Strom versorgt. Falls in dieser Zeit kein weiteres sensorauslösendes Ereignis festgestellt wird, so wird die Sensorschaltphase wieder abgeschaltet, sodass der Verbraucher spannungslos wird.

Die aus dem Stand der Technik bekannten Sensorschaltungen können auch für einen Parallelbetrieb mehrerer Sensoren, die einen oder mehrere Verbraucher ansteuern, ausgelegt werden. Des Weiteren ist es möglich, parallel zu einer induktiven Last ein so genanntes Löschglied, beispielsweise eine Kapazität, zu schalten, das Überspannungen durch Selbstinduktion abfängt und dadurch den Sensor schützt. Eine Dauerlichtfunktion ist beispielsweise durch die Parallelschaltung eines Tasters zwischen Sensornetz- und Sensorschaltphase durch einen Schalter, der den Sensor kurzschließt und somit den Verbraucher manuell einschaltbar macht, möglich. Darüber hinaus ist der parallele Betrieb eines Bewegungsmelders mit einem Treppenlichtautomaten möglich, sodass das Licht im Treppenhaus nach Tastenanforderung über eine vorbestimmte Zeit, die der Treppenlichtautomat bestimmt, leuchtet, und daneben auf Bewegungsanforderung durch den Sensor eingeschaltet werden kann. Letztlich lässt sich eine manuelle Einschaltung des Verbrauchers durch Unterbrechen der Sensornetzphase realisieren, da dadurch der Bewegungsmelder kurzfristig vom Netz getrennt wird und somit standardmäßig in Betrieb gesetzt wird und eine vorbestimmte Zeit abwartet, in der kein sensorauslösendes Ereignis stattfindet, bis er den Verbraucher durch Abschalten der Sensorschaltphase wieder stromlos macht.

Nachteilig an dem oben genannten Stand der Technik ist, dass der Bewegungsmelder ständig an der Netzphase angeschlossen ist und dadurch kontinuierlich Strom verbraucht. Dies wirkt sich direkt auf die Lebensdauer des Bewegungsmelders aus.

Bei den aus dem Stand der Technik bekannten Sensorschaltungen führt ein Ausfall des Sensors dazu, dass die Schaltung als Ganzes defekt ist und sich der Verbraucher nicht mehr ein- oder ausschalten lässt. Daher ist es wünschenswert, eine Sensorschaltung zur Verfügung zu stellen, die auch im Falle eines Ausfall des Sensors eine Ein-/Ausschaltmöglichkeit des Verbrauchers zu ermöglichen.

Ferner schaltet das interne Lastrelais des Bewegungsmelders direkt den Verbraucher, sodass gerade bei hohen Verbraucherleistungen die Schaltkontakte des Bewegungsmelders stark beansprucht werden und seine Lebensdauer beeinträchtigen. Insbesondere moderne stromsparende Leuchtmittel mit elektronischen Vorschaltgeräten erfordern einen hohen Einschaltstrom und Belasten das interne Lastrelais des Sensors stark, so dass die Lebensdauer des Sensors stark vermindert wird.

Gerade beim Einsatz von Sensoren in öffentlichen Räumen, beispielsweise bei der Lichtsteuerung in Toilettenanlagen, Unterführungen etc. ist es wünschenswert, dass die Schaltung bei nicht eingeschaltetem Verbraucher keinen Strom verbraucht, und die einzelnen Komponenten eine extrem lange Lebensdauer aufweisen und dabei wartungsfreundlich sind.

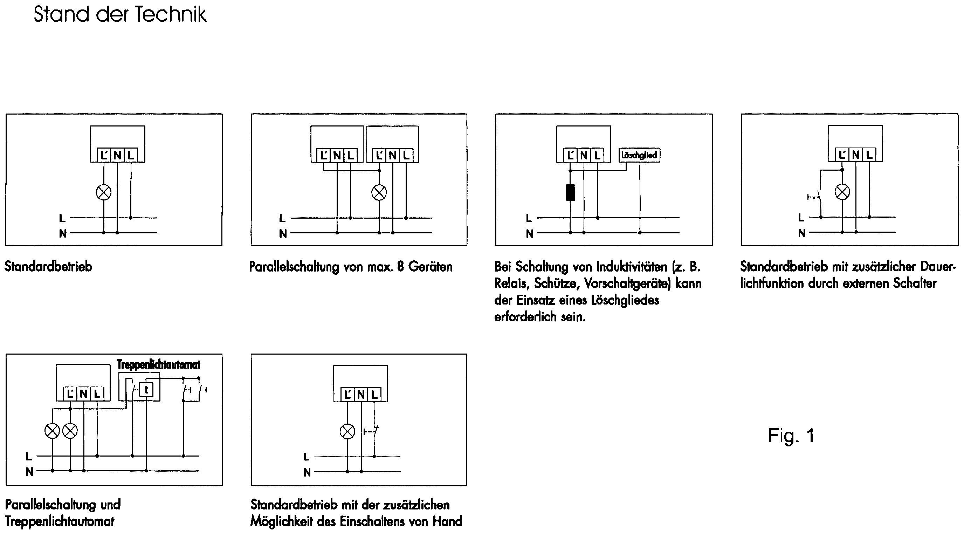

Des Weiteren ist erwünscht, dass eine Schaltung im öffentlichen Raum beliebig und unkompliziert durch günstige konventionelle Schaltmittel wie beispielsweise Wechsel- oder Kreuzschalter erweiterbar ist und dass nur eine geringe Zahl von Elektronikbauteilen zum Einsatz kommt. Dabei ist eine Trennung von Last- und Steuerschaltkreis durchaus erwünscht. Konventionelle Sensorschaltungen wie die in **Fig. 1** dargestellten Schaltvarianten erfüllen diese Aufgaben nicht.

Aufgabe der Erfindung ist demnach, eine kostengünstige, langlebige und stromsparende Sensorschaltung vorzuschlagen, die im Standby-Modus keinen Strom verbraucht, eine hohe Lebensdauer der einzelnen Komponenten aufweist, eine Trennung von Last- und Steuerschaltkreis ermöglicht, beliebig durch konventionelle Schaltmittel wie Wechsel-, Kreuzschalter oder Taster erweiterbar ist, und in öffentlichen Räumen kostengünstig, leicht wartbar und langlebig eingesetzt werden kann.

Diese Aufgaben werden durch die im Anspruch 1 beschriebene Schaltung gelöst. Weitere Ausführungsformen sind in den Unteransprüchen beschrieben.

Erfindungsgemäß umfasst die stromsparende Sensorschaltung zumindest einen Sensor, einen manuell betätigbaren Schalter oder Taster, einen Stromstoßschalter und mindestens einen an einer Verbraucherphase angeschlossenen Verbraucher. Der Verbraucher ist dabei über den Stromstoßschalter zumindest ausschaltbar, und der Sensor hat die Eigenschaft, dass er nach Einschalten seiner Sensornetzphase eine Sensorschaltphase einschaltet, und nach Feststellung keines sensorauslösenden Ereignisses über einen vorbestimmten Zeitraum die Sensorschaltphase wieder abschaltet. Insoweit weist die Schaltung bereits aus dem Stand der Technik bekannte Mittel auf. Im Folgenden soll der Begriff Stromstoßschalter synonym mit dem Begriff eines bistabilen Relais und der Begriff Relais mit dem eines monostabilen Relais verwendet werden.

Die Schaltung weist darüber hinaus ein Steuermodul auf, das verbraucherphasenseitig angeschlossen ist. An dem Steuermodul ist der Sensor mit seiner Sensornetzphase und seiner Sensorschaltphase angeschlossen, sowie die Stromphase des Stromstoßschalters zur Betätigung verbunden.

Dadurch dass das Steuermodul verbraucherphasenseitig angeschlossen ist, werden bei Betätigung des Schalters oder Tasters sowohl der Verbraucher, als auch das Steuermodul und damit der Sensor mit Spannung versorgt. Nach Feststellung keines sensorauslösenden Ereignisses über eine vorbestimmte Zeit schaltet der Sensor die Sensorschaltphase ab, was vom Steuermodul registriert wird. Hierdurch gibt das Steuermodul einen Schaltimpuls an die Stromstoßspule des Stromstoßschalters ab, sodass diese die Verbraucherphase abschaltet und dadurch Verbraucher, Steuermodul und Sensor von der Spannungsversorgung trennt.

Mit anderen Worten betrifft die erfindungsgemäße Schaltung einen Sensorschaltkreis, an dem über einen Schalter oder einen Taster und einem Stromstoßschalter eine Verbraucherphase eingeschaltet werden kann. An dieser Verbraucherphase ist neben dem Verbraucher auch ein Steuermodul angeschlossen, das den Stromstoßschalter steuert. Durch Einschalten der Verbraucherphase über den Taster oder den Schalter wird der Verbraucher in Betrieb gesetzt und das Steuermodul mit Sensor aktiviert. Nimmt der Sensor über eine längere Zeit kein sensorauslösendes Ereignis wahr, so schaltet er die Sensorschaltphase ab. Durch Abschalten der Sensorschaltphase gibt das Steuermodul einen Impuls auf den Stromstoßschalter, der zumindest den Verbraucher und damit die Verbraucherphase abschaltet. Durch das Abschalten der Verbraucherphase wiederum wird Steuermodul und Sensor außer Betrieb gesetzt. Somit ist die Schaltung im ausgeschalteten Zustand völlig stromlos und nimmt keinen Ruhestrom auf. Hierdurch wird der Sensor bei ausgeschaltetem Verbraucher nicht im Standby-Modus, sondern im Aus-Modus betrieben.

Als Sensor kann ein kostengünstiger Sensor, der die genannten Eigenschaften aufweist, eingesetzt werden. Es werden dabei keine Voraussetzungen an die Lastschaltfähigkeit des Sensors gestellt. Die Schaltung ist mittels konventioneller Schaltungstechnik, das heißt Wechselschalter, Kreuzschalter oder Taster beliebig erweiterbar. Dadurch dass der Verbraucher bzw. die Verbraucherphase über Schalter und Taster eingeschaltet und über den Stromstoßschalter ausgeschaltet werden kann, sind Lastschaltkreis und Steuerschaltkreis mit Sensor elektrisch voneinander getrennt. Dadurch können Lastschaltkreis und Steuerschaltkreis über verschiedene Nennspannungen betrieben werden, beispielsweise ist es denkbar, dass die Sensorschaltung mit Kleinspannung arbeitet, während die Lastspannung hohe Spannungen und Ströme schalten kann. Aufgrund des stromsparenden Aus-Betriebes und seiner Selbstabschaltfähigkeit ist die erfindungsgemäße Schaltung insbesondere für den Einsatz in öffentlichen Räumen wie Toilettenanlagen, Fußgängerdurchgänge, Parkplatzbeleuchtungen und ähnliches optimal geeignet.

Ein Defekt des Sensors führt zu einem Ausfall der Selbstabschaltfähigkeit der Schaltung. Jedoch ist es erfindungsgemäß weiterhin möglich, mit Hilfe des manuell betätigbaren Schalters oder Tasters über das Steuermodul den bistabilen Stromstoßschalter zu betätigen, und somit den Verbraucher manuell Ein- bzw. Auszuschalten, dies erhöht die Zuverlässigkeit der Schaltung.

Nach einer besonderen Ausführungsform kann der manuell betätigbare Schalter ein netzphasig angeschlossener Wechselschalter und der Stromstoßschalter ein verbraucherseitig angeschlossener Stromstoßwechselschalter sein, die zusammen als gewöhnliche Wechselschaltung mit zwei vermittelnden korrespondierenden Leitung (Korrespondierende) geschaltet sind. Dabei wird die Netzphase an den manuell betätigten Wechselschalter angeschlossen, und die beiden Korrespondierenden zu den beiden Eingängen des Stromstoßwechselschalters geführt. Dessen Ausgangskontakt stellt die Verbraucherphase dar, an der Steuermodul und Verbraucher, sowie Sensor angeschlossen sind. Durch den Einsatz einer Wechselschaltung ist es vorteilhaft vorstellbar, dass in die korrespondierenden Leitungen weitere, mindestens ein weiterer Kreuzschalter, eingeschaltet werden kann und somit die Zahl der Schaltstellen beliebig erhöht werden kann. Insbesondere die Verwendung eines Wechselschalters, über dessen Kontakte der gesamte Verbraucherstrom fließt, oder der Anschluss des Verbrauchers unmittelbar an den Stromstoßschalter ermöglicht den Anschluss von Verbrauchern mit hohen Schaltströmen. Wird der Verbraucher direkt an der Verbraucherphase angeschlossen, so steuert das interne Lastrelais des Sensors lediglich die Abschalttätigkeit des Steuermoduls und wird nicht durch den Verbraucherstrom belastet. Dadurch wird die Lebensdauer des Sensors erhöht. Insbesondere stromsparende Energielampen und Leuchtstoffröhren mit elektronischen Vorschaltgeräten verursachen hohe Einschaltströme, die lediglich die robusten Schaltkontakte des Wechselschalters bzw. Stromstoßschalters belasten, jedoch die internen Kontakte des Sensors, insbesondere Bewegungsmelders nicht in Mitleidenschaft ziehen.

Des Weiteren ist es vorstellbar, dass als manuell betätigbarer Taster ein beliebiger Ein-Taster verwendet wird, der über die Netzphase direkt mit der Stromspule des Stromstoßschalters verbunden ist. Somit kann als manuell betätigbarer Taster ein einfacher Ein-Taster einer Stromstoßschaltung verwendet werden, sodass die Netzphase am Eingang eines der beiden Kontakte des Stromstoßschalters liegt, und der andere Schaltkontakt des Stromstoßschalters als Verbraucherphase dient, an der Steuermodul und Sensor anschließbar sind. Durch Parallelschaltung beliebiger weiterer Taster an den Ein-Taster ist diese Schaltung mit einfacher konventioneller Schaltungstechnik um weitere Einschaltstellen beliebig erweiterbar.

Der Stromstoßschalter trennt Lastschaltkreis und Steuerschaltkreis. Dabei ist es vorteilhaft vorstellbar, dass in einer besonderen Ausführungsform die Stromstoßspule mit einer Nennspannung verschieden von der Netzspannung bestrombar ist. So kann der Lastschaltkreis mit Verbraucher und Kontakten des Stromstoßschalters mit Netzspannung betrieben werden, und Steuermodul, Stromstoßspule und Sensor mit Kleinspannung, beispielsweise 8-Volt-Wechselspannung, betreibbar sein. Dies ist insbesondere an den Orten vorteilhaft, an denen aufgrund besonderer Bedingungen eine Kleinspannung erwünscht wird, beispielsweise in chemischen Anlagen, bei denen Explosionsgefahr durch Funkenflug herrscht, oder im Bäderbereich.

Grundsätzlich können als Sensoren beliebige Sensorarten eingesetzt werden. Die Grundforderung, die die Schaltung an den Sensor stellt, liegt darin, dass der Sensor beim Einschalten seiner Sensornetzphase seine Sensorschaltphase unter Spannung setzt, d.h. mit der Sensornetzphase verbindet, und nach Feststellung keines sensorauslösenden Ereignisses über einen vorbestimmten Zeitraum die Sensorschaltphase wieder abschaltet. Es wird dabei vorausgesetzt, dass im Sensor eine Zeitmesseinrichtung vorhanden ist, über die der vorbestimmbare Zeitraum einstellbar ist. Besonders vorteilhaft ist die Ausführung des Sensors als Bewegungsmelder, insbesondere als PIR-Sensor, der zur Bewegungsüberwachung eines Raumes dient, und sofern er eine Bewegung feststellt, den Verbraucher eingeschaltet lässt. Stellt der Bewegungsmelder über einen längeren Zeitraum keine Bewegung fest, so schaltet er die Beleuchtung aus und sich selbst dadurch stromlos. Eine erneute Betätigung durch einen manuell betätigbaren Schalter oder Taster aktiviert den Schaltkreis wieder, solange sich in dem Raum Personen aufhalten. Dadurch wird eine stromsparende Bewegungsmelderschaltung realisierbar, die erst durch manuelle erste Betätigung aktiviert wird, und sodann den Verbraucher solange eingeschaltet bleibt, solange sie Bewegungen registriert.

Des Weiteren ist es jedoch auch denkbar und vorteilhaft, dass als Sensor ein Rauchmelder, ein Geruchssensor, ein Geschmackssensor oder eine chemische Sonde eingesetzt wird. Auch ist die Verwendung eines Temperatursensors, eines Feuchte- oder Windsensors als Sensor der Sensorschaltung denkbar. Die Vielzahl der Sensortypen richtet sich lediglich nach dem speziellen Einsatzgebiet, in dem die Sensorschaltung eingesetzt werden kann, um einen stromsparenden Betrieb und eine lange Lebensdauer zu garantieren. Schließlich ist auch der Einsatz des Sensors als funkgesteuerter Sensor denkbar und vorteilhaft, beispielsweise wenn das eigentliche Sensorelement in großer Entfernung von der Entfernung vom Steuermodul angebracht werden muss, und die Signalisierung über ein Funkmodul drahtlos vonstatten gehen soll.

Das Steuermodul weist in allen Fällen Anschlussklemmen für eine Sensornetzphase und eine Sensorschaltphase auf. Besonders vorteilhaft und flexibel weist das Steuermodul des Weiteren zumindest Eingangskontakte für den N-Leiter, die Verbraucherphase sowie die Sensorschaltphase auf, sowie zumindest Ausgangskontakte für die Sensornetzphase und die Schaltphase der Stromspule. Durch eine solche Vielzahl von Steuerkontakten lassen sich die einzelnen Elemente der Schaltung Verbraucher, Stromstoßspule und Sensor zentral an das Steuermodul anschließen, sodass eine einfache, sternförmige Verdrahtung der Schaltung möglich ist.

Des Weiteren weist das Steuermodul vorteilhafterweise in einem besonderen Ausführungsbeispiel weitere Eingangskontakte für Ein-Taster zum Ein-, Aus- und Ein/Austasten des Verbrauchers auf. Diese zusätzlichen Eingangskontakte für Ein-, Aus- und Ein/Austaster ermöglichen eine vielfältige Skalierbarkeit der Schaltung hinsichtlich zentraler Ein- und Ausschaltmöglichkeiten, sowie beliebiger weiterer Ein/Austaststellen. So ist die Möglichkeit gegeben, parallel und unabhängig von den vorgenannten manuell betätigbaren Tastern/Schaltern weitere Taster vorzusehen, die autark von der vorgenannten manuellen Einschaltmöglichkeit, die Schaltung ein- bzw. ausschalten können. Die genannten Taster erreichen dies dadurch, dass sie in gewissen Schaltstellungen des Steuermoduls (Eingeschaltet, Ausgeschaltet, beliebige Schaltstellung) eine direkte Verbindung zur Spule des Stromstoßschalters haben und diese ansprechen können.

Die Anordnung des in der Schaltung befindlichen Stromstoßrelais ist grundsätzlich beliebig. So können bereits vorhandene Stromstoßrelais, die über einen Ein-/Aus- oder Wechselkontakt verfügen, im Rahmen der Schaltung eingesetzt werden. Besonders vorteilhaft und kompakt können die einzelnen Komponenten der Schaltung durch Integration des Stromstoßrelais im Steuermodul ausgeführt werden. Hierdurch wird das Stromstoßmodul im Steuermodul verborgen untergebracht, sodass sich die Anzahl der zu verdrahtenen Komponenten reduziert.

Des Weiteren ist die Anordnung des Steuermoduls in der Schaltung ebenfalls beliebig. Es hat sich als besonders vorteilhaft und kompakt herausgestellt, wenn das Steuermodul im Sensor, beispielsweise im Bewegungsmelder integriert ist. Dadurch wird zusätzlicher Verdrahtungsaufwand reduziert und die Komplexität der Anschlussanzahl verringert.

Schließlich ist es vorteilhaft, dass das Steuermodul- und/oder das Stromstoßrelais im Wechselschalter integrierbar ist. Dabei ist es auch vorstellbar und leicht realisierbar, dass das Steuermodul bzw. das Stromstoßrelais mittels Steckkontakte an den Wechselschalter mechanisch ansteckbar und elektrisch anschließbar ist. Beispielsweise ist eine Steckklemmverbindung von Steuermodul mit den Eingangskontakten des Wechselschalters, in dem normalerweise die Stromleitungen eingesteckt werden, denkbar. Auch hierdurch kann eine Reduktion der Schaltungskomplexität und der Verzicht auf zusätzliche Leitungen erreicht werden.

Ebenfalls denkbar und vorteilhaft ist die Anordnung des Steuermoduls innerhalb eines zu steuernden Verbrauchers, insbesondere in einem Leuchtkörper bzw. einer Lampe. Hierbei kann in dem Lampenkörper sowohl das Steuermodul, als auch der Sensor untergebracht werden, so dass die Lampe vorkonfektioniert lediglich an eine üblichen Lampenanschluß mit geschalteter Phase angeschlossen werden kann. Somit entfällt zusätzlicher Montage- und Verdrahtungsaufwand, wobei der Sensor in diesem Fall in der Regel ein Bewegungssensor sein wird.

Der interne Aufbau des Steuermoduls ist grundsätzlich beliebig. In einem bevorzugten Ausführungsbeispiel weist das Steuermodul einen Schaltkreis mit zumindest teilweisen elektronischen analogen und/oder auch digital verschalteten Bauteilen auf. So kann beispielsweise im Steuermodul ein digitaler Schaltkreis verbaut sein, der elektronisch die Funktion des Sensors überwacht und die Stromstoßspule ansteuert.

Ist der Schaltkreis des Steuermoduls elektronisch ausgeführt, so ist es vorteilhaft, wenn der Schaltkreis zumindest einen Energiespeicher wie ein Akku, Kondensator oder eine Batterie umfasst. Durch eine Stützenergiequelle wie Akku, Kondensator oder Batterie werden die elektronischen Komponenten auch im ausgeschalteten Zustand unter Spannung gehalten, sodass festgelegte eingespeicherte Werte wie Beleuchtungsdauer, Abschaltverhalten oder sonstige Parameter auch nach Abschalten der Verbraucherphase gespeichert bleiben.

Dabei ist es ebenfalls vorteilhaft, wenn der Energiespeicher wieder aufladbar ist und sich bei eingeschaltetem Verbraucher, das heißt aktivierter Verbraucherphase aufladen kann, um weiterhin eine Spannungsversorgung im ausgeschalteten Zustand und eine lange Funktionsdauer der Schaltung zu gewährleisten.

Alternativ zum Aufbau des Schaltkreises mit elektronischen Bauteilen ist es besonders vorteilhaft, wenn das Steuermodul einen Schaltkreis umfasst, der mit rein elektromechanischen Bauteilen wie Relais, Schützen oder Stromstoßschalter aufgebaut ist. Durch einen rein elektromechanischen Aufbau sind die Kosten für das Steuermodul äußerst gering, die Langlebigkeit gerade bei hohen Lastströmen gewährleistet und eine einfache Reparatur des Steuermoduls möglich.

Ist das Steuermodul mit einem elektromechanischen Schaltkreis ausgerüstet, so ist es besonders vorteilhaft, wenn der Schaltkreis zwei Schaltrelais R1, R2 mit jeweils zumindest einem potentialfreien Wechselkontakt und einem Einschaltkontakt umfasst. Dabei ist der erste Spulenkontakt jedes Relais mit dem Nullleiter verbunden und im Ruhezustand von R1 und R2 sind die Einschaltkontakte geöffnet und der Einschaltkontakt des Wechselkontakts mit einem ersten Ausgangskontakt des Wechselkontakts verbunden.

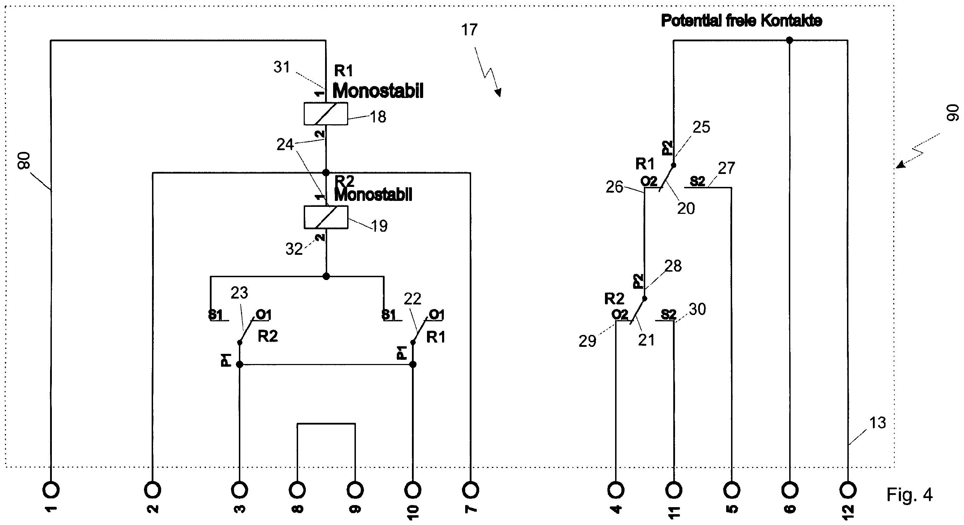

Mittels eines solchen Aufbaus der Schaltung des Steuermoduls ist es des Weiteren vorteilhaft möglich, dass ein zweiter Ausgangskontakt des Wechselkontakts von R2 mit der Verbraucherphase verbunden ist, der Eingangskontakt des Wechselkontakts von R2 mit einem ersten Eingangskontakt des Wechselkontakts von R1 verbunden ist, und der Eingangskontakt des Wechselkontakts von R1 mit der Stromstoßspule als Schaltphase des Stromstoßschalters verbunden ist, wie es in **Fig. 4** dargestellt ist.

Des Weiteren ist es bei einem solchen Aufbau der Schaltung des Steuermoduls möglich, dass der zweite Spulenkontakt von R1 mit der Sensorschaltphase, sowie der erste Spulenkontakt von R2 über die parallel geschalteten als Selbsthaltung fungierenden Einschaltkontakte von R1 und R2 mit der Verbraucherphase verbunden sind. Somit ergibt sich eine Schaltung, wie sie in **Fig. 4** dargestellt ist, und die eine Verkettung der beiden Relais R1 und R2 darstellt. Durch die Verkettung der Wechselkontakte hintereinander, sowie die Selbsthaltung des Relais R2 bei Aktivierung des Relais R1 ergeben sich gewisse Schaltzustände, die den stromsparenden Betrieb des Sensors ermöglichen. Dabei ist zu bedenken, dass aufgrund einer Einschaltverzögerung der Sensorschaltphase des Sensors bei Einschaltung der Sensornetzphase nach einer stromlosen Phase der Schaltung zunächst der Wechselkontakt von R1 und hiernach der Wechselkontakt von R2 anzieht, so das die kaskadierte Umschaltung der Wechselkontakte die Abgabe eines Schaltimpulses an die Spule des Stromstoßschalters verhindert. Des Weiteren wird zunächst die Schaltung durch Aufschaltung der Verbraucherphase bestromt, jedoch schaltet erst später die Sensorschaltphase ein. Dadurch wird das Relais R1 angezogen, dass wiederum das Relais R2 zur Selbsthaltung über die Einschaltkontakte von R1 und R2 bringt. R2 hält sich danach unabhängig vom Verhalten der Sensorschaltphase selbst. Bei Abfall der Sensorschaltphase ermöglicht der abgefallene Wechselkontakt von R1 und der angezogene Wechselkontakt von R2 die Abgabe eines kontrollierten Stromimpulses an die Spule des Stromstoßschalters, so dass dieser kontrolliert die Verbraucherphase abschaltet und damit die Schaltung stromlos macht. Die Impulsabgabe an den Stromstoßschalter passiert dabei in einer kontrollierten Form unabhängig vom Schaltverhalten des Sensors oder des Ein- oder Austasters.

Falls der Sensor defekt ist, d.h. die Sensorschaltphase nicht ein- oder ausgeschaltet wird, so kann zumindest durch den manuell betätigbaren Schalter die Verbraucherphase und damit der Verbraucher ein- und ausgeschaltet werden. Ist ein Taster zur manuellen Betätigung vorgesehen, so ermöglicht dieser weiterhin durch die definierten Schaltstellungen der Wechselkontakte die Abgabe eines Stromimpulses an den Stromstoßschalter zum Ein- und Ausschalten der Verbraucherphase.

In vorteilhafter Weise wird die stromsparende Sensorschaltung in einem weiteren Ausführungsbeispiel dadurch ergänzt, dass der erste Ausgangskontakt des Wechselkontakts von R2 über einen Ein-Taster mit der Netzphase verbindbar ist, der bei Betätigung des Ein-Tasters eine Einschaltung des Verbrauchers bewirkt. Dies geschieht dadurch, dass im ausgeschalteten Zustand der Schaltung der Ein-Taster einen direkten Zugriff auf die Stromstoßspule hat, und diese betätigen kann.

Außerdem ist es vorstellbar und vorteilhaft, dass der zweite Ausgangskontakt des Wechselkontakts von R1 über einen Eintaster mit der Netzphase verbindbar ist, der bei Betätigung eine Ausschaltung des Verbrauchers bewirkt. Dies geschieht dadurch, dass im eingeschalteten Zustand der Schaltung der Eintaster einen direkten Zugriff auf die Stromstoßspule hat, und diese betätigen kann.

Schließlich ist es in einem weiteren Ausführungsbeispiel denkbar und möglich, dass der Eingangskontakt des Wechselkontakts von R1 über einen Ein-Taster mit der Netzphase verbindbar ist, der bei Betätigung eine Ein/Ausschaltung des Verbrauchers bewirkt. Der Eintaster hat unabhängig von der Schaltstellung des Steuermoduls einen direkten Zugriff auf die Stromstoßspule und kann diese umschalten.

Somit sind nach den oben genannten drei Schaltmöglichkeiten eines Ein-Tasters, eine zentrale Eintastung, eine zentrale Austastung und eine dezentrale Ein/Austastung des Verbrauchers mittels angeschlossener Taster möglich. Diese nützen aus, dass bei gewissen Schaltstellungen der Wechselkontakte von R1 und R2 eine Betätigung der Stromstoßspule möglich wird, die ein Ein-Aus-oder Ein/Ausschalten des Verbrauchers ermöglicht.

Eine weitere vorteilhafte Ausgestaltung des Schaltkreises im Steuermodul ist dadurch gegeben, dass der Einschaltkontakt von R1 ebenfalls als Wechselkontakt ausgeführt ist, wobei im Ruhezustand des Einschaltkontaktes eine Kontrolllampe LMP1 leuchtet, die anzeigt, dass der Sensor nicht aktiviert ist. Eine solche Ausgestaltung des Einschaltkontakts mit angeschlossener Kontrolllampe ermöglicht die Überprüfung des Schaltzustandes des Steuermoduls. Des Weiteren ist es ebenfalls denkbar und vorteilhaft, dass parallel zum Schaltrelais R2 eine Kontrolllampe LMP2 geschaltet ist, die anzeigt, dass der Sensor aktiviert ist. Ist das Schaltrelais R2 angezogen, so ist der Sensor aktiv und wartet ab, ob ein sensorauslösendes Ereignis die Sensoreinschaltzeit, das heißt die Zeit, in dem die Sensorschaltphase unter Spannung steht, verlängert wird. Parallel zum Schaltrelais R2 kann die Kontrolllampe LMP2 den eingeschalteten und daher aktiven Zustand des Sensors anzeigen.

Grundsätzlich ist der Verbraucher direkt an die Verbraucherphase angeschlossen. Es ist durchaus denkbar und vorteilhaft, dass parallel zu einem an der Verbraucherphase angeschlossenen Verbraucher oder auch alternativ hierzu ein Verbraucher direkt an die Sensorschaltphase angeschlossen werden kann. Dieser Verbraucher wird dann durch die im Sensor vorhandene Lastschaltelektronik geschaltet, und kann unabhängig vom Verbraucher an der Verbrauchernetzphase betrieben werden.

Zusätzlich_ergibt sich eine vorteilhafte Ausgestaltung der Schaltung dadurch, dass an der Sensorschaltphase ein Zeitrelais als Nachlaufrelais eingeschaltet ist. Ein Nachlaufrelais ermöglicht eine individuelle Einstellung der Einschaltzeit des Verbrauchers, sodass erst nach spätestens dieser Zeit der Sensor eine Abschaltung des Verbrauchers vornehmen kann. Dadurch ergibt sich eine höhere Flexibilität bei der Einstellbarkeit der Laufzeit des Verbrauchers nach Betätigung des manuell betätigbaren Schalters oder Tasters.

Zur Erweiterung der Flexibilität der Gesamtschaltung ist es vorstellbar, dass die Schaltung des Weiteren mindestens ein Kommunikationsmodul umfasst, das zwischen Steuermodul und Sensor geschaltet werden kann, und an das mindestens ein weiteres Steuermodul und/oder ein weiterer Sensor anschließbar ist. Das Kommunikationsmodul ermöglicht den parallelen Betrieb verschiedener Steuermodule mit verschiedenen Verbrauchern an einem einzigen Sensor. Umgekehrt können auch mehrere Sensoren an ein oder mehrere Steuermodule angeschlossen werden. Dadurch ist es beispielsweise möglich, mittels eines einzigen Sensors verschiedene Steuermodule mit verschieden angeschlossenen Verbrauchern parallel und unabhängig voneinander zu betreiben. Je nachdem welcher Taster welches Steuermodul aktiviert, wird exklusiv der Sensor für dieses Steuermodul reserviert, sodass das aktivierte Steuermodul den Sensor steuert. Wird nach Ablauf der vorbestimmbaren Zeit, in der kein sensorauslösendes Ereignis stattgefunden hat, der Verbraucher abschaltet, so kann durch Betätigen eines Schalters oder Tasters eines weiteren Steuermoduls, das an das Kommunikationsmodul angeschlossen ist, der Sensor für dieses weitere Steuermodul reserviert werden. Somit sind durch Einsatz eines Kommunikationsmoduls mehrere Steuermodule an einem einzigen Sensor betreibbar.

Grundsätzlich ist der Aufbau des Kommunikationsmoduls beliebig, in einer besonders vorteilhaften Ausführung umfasst das Kommunikationsmodul einen weiteren Schaltkreis, der mit rein elektromechanischen Bauteilen, wie Relais, Schützstromschaltern aufgebaut ist. Jedoch ist ebenfalls ein Aufbau unter zumindest teilweiser Verwendung elektronischer Bauteilen, insbesondere Dioden denkbar. Hierzu ist es besonders vorteilhaft, wenn der weitere Schaltkreis mindestens zwei Schaltrelais R1', R2' mit jeweils zumindest zwei Schließkontakten umfasst, die den beiden Steuermodulen zugeordnet sind, wobei die Spulenkontakte jedes Relais zwischen Nullleiter und Sensornetzphase des Sensorausgangs des zugeordneten Steuermoduls geschaltet sind und wobei die Einschaltkontakte der Schaltrelais im aktivierten Zustand jeweils Sensornetzphase und Sensorschaltphase des an das Kommunikationsmoduls angeschlossenen Sensors mit den Ein- und Ausgangskontakten des zugeordneten Schaltmoduls verbinden. Somit umfasst das Kommunikationsmodul so viele Relais, wie Steuermodule an ihm angeschlossen sind. Die Relais bewirken ein Durchschalten der Ausgänge der Steuermodule zum Sensor mit den Sensoreingängen. Wird ein Steuermodul aktiviert, das bedeutet dessen Verbraucherphase unter Spannung gesetzt, wird das Relais, das dem Steuermodul zugeordnet ist, aktiviert. Dieses Relais schaltet die Sensornetzphase und die Sensorschaltphase des Steuermoduls an den Sensor durch, während dessen können die übrigen Relais gesperrt werden.

Grundsätzlich kann die stromsparende Sensorschaltung beliebig eingesetzt werden. Besonders vorteilhaft wird die Schaltung in einer öffentlich zugänglichen Räumlichkeit, wie öffentliche Toilette, Baderäume, Durchgang durch Unterführungen etc. eingesetzt.

Des Weiteren kann die Schaltung auch vorteilhafterweise in einem Gerät der Unterhaltungselektronik wie Fernseher, Radio, Stereoanlage etc. eingesetzt werden.

Auch ist es denkbar, die Schaltung in einem Haushaltsgerät wie Bügeleisen, elektrischen Heizofen, Herd etc. einzusetzen.

Des Weiteren kann die Schaltung in einer zu überwachenden Anlage, beispielsweise in einer chemischen Fabrik oder in großindustriellen Anlagen eingesetzt werden, in denen es notwendig ist, dass sich Bedienungspersonal in der Nähe befindet. Registriert der Sensor über eine längere Zeit keine Bewegung, so schaltet er zumindest einen Teil der Anlage ab. Ist Bedienpersonal in der Nähe, so registriert der Sensor beispielsweise die Bewegung und lässt die Anlage weiter am Netz. Durch die Schaltung wird ein Verfahren ausgeführt, dass durch ein Umschalten des manuell betätigbaren Schalters oder Tasters die Verbraucherphase unter Spannung setzt, wodurch die Verbraucherphase als Sensornetzphase geschaltet ist und somit den Sensor in Betrieb setzt. Ist der Sensor im Betrieb, aktiviert dieser seine Sensorschaltphase, wodurch ein Schaltrelais R1 anzieht und durch die durch den Einschaltkontakt des Relais R1 aktivierte Selbsthaltung des R2 das Schaltrelais R2 aktiviert. Stellt der Sensor nach einer vorbestimmten Zeit kein sensorauslösendes Ereignis fest, so schaltet er die Sensorschaltphase spannungslos, sodass hierdurch das Schaltrelais R1 abfällt. In einem weiteren Schritt wird das Stromrelais über den zweiten Kontakt des Wechselkontakts vom angezogenen Relais R2 und den ersten Kontakt des Wechselkontakts des abgefallenen Relais R1 mittels eines Stromimpulses an die Schaltphase der Stromstoßspule betätigt, sodass das Stromstoßrelais umschaltet und hierdurch die Verbraucherphase abschaltet, sodass die Schaltung bis zur erneuten Betätigung des Wechselschalters stromlos geschaltet wird und alle Relaiskontakte in ihre Grundstellung zurückkehren.

Mit anderen Worten betrifft das Verfahren eine Schaltfolge, die durch die Betätigung des manuell betätigbaren Schalters oder Tasters aktiviert wird. Wird der Schalter oder Taster betätigt, so wird der Sensor aktiviert und schaltet die Sensorschaltphase aktiv. Dies wiederum zieht das Relais R1 an. Durch das angezogene Relais R1, das durch die Sensorschaltphase des Sensors aktiviert wird, wird das Relais R2 in Selbsthaltung eingeschaltet. Dadurch ergibt sich ein hintereinander umschaltender Strompfad über die Wechselkontakte von R1 und R2, wobei die Stromstoßspule während des Einschaltvorgangs nicht unter Spannung gesetzt wird. Schaltet die Sensorschaltphase nach einer vorbestimmten Zeit ab, in der kein sensorauslösendes Ereignis aufgetreten ist, so fällt R1 ab. Durch das Abfallen von R1 wird der Wechselkontakt von R1 umgeschaltet, somit ergibt sich ein Stromfluss über den aktivierten Wechselkontakt von R2 und den abgefallenen Wechselkontakt von R1, sodass die Stromstoßspule einen kurzfristigen Spannungsimpuls der Verbraucherphase erhält.

Hierdurch schaltet der Stromstoßschalter um und damit die Verbraucherphase ab, sodass nun auch das Relais R2 ausgeschaltet wird. Damit ist die Verbraucherphase abgeschaltet und die Gesamtschaltung stromlos. Grundlegend für die Wirkungsweise der erfindungsgemäßen Vorrichtung und des erfindungsgemäßen Verfahrens ist die Reihenschaltung der beiden Wechselkontakte der Relais R1 und R2, deren verschiedene Schaltpositionen, die je nach Schaltsituation eine Zuführung eines Impulses zur Stromstoßspule ermöglicht.

Das Verfahren kann vorteilhafterweise dadurch fortgebildet werden, dass durch Betätigung eines mit der Netzphase und dem ersten Ausgangskontakt des Wechselkontakts des Schaltrelais R2 verbundenen Ein-Tasters die Verbraucherphase unter Spannung geschaltet werden kann. Im ausgeschalteten Zustand der beiden Relais R1 und R2 ergibt sich ein Pfad von erstem Ausgangskontakt des Schaltrelais R2 zur Spule des Stromstoßschalters. Durch Beaufschlagung dieses Kontakts durch einen von dem Eintaster ausgelösten Stromimpuls schaltet das Stromstoßrelais um und schaltet die Schaltung in Betrieb.

Des Weiteren kann die Schaltung vorteilhafterweise weitergebildet werden, in dem in der aktiven Phase der Schaltung durch Betätigung eines mit der Netzphase und dem zweiten Ausgangskontakt des Wechselkontakts des Schaltrelais R1 verbundenen Ein-Tasters die Verbraucherphase spannungslos geschaltet werden kann. Diese als Aus-Taster funktionierende Tasterkombination nutzt die spezifische Schaltstellung der beiden aktivierten Wechselkontakte von R1 und R2 aus, sodass bei Beaufschlagung des zweiten Ausgangskontakts des Wechselkontakts des Schaltrelais R1 ein stromleitender Pfad zur Stromstoßspule existiert, bei der durch Betätigung des Aus-Tasters ein Stromstoß an die Stromstoßspule weitergegeben werden kann und diese in einen Ausschaltzustand bringt.

Letztlich kann in einer weiteren vorteilhaften Ausbildung des Verfahrens durch Betätigung eines mit der Netzphase und dem Eingangskontakt des Wechselkontakts des Schaltrelais R1 verbundenen Ein-Tasters die Verbraucherphase ein- bzw. ausgeschaltet werden. Der Eingangskontakt des Wechselkontakts des Schaltrelais R1 steht in direkter Verbindung mit der Spule des Stromstoßschalters, sodass eine Beaufschlagung dieses Kontakts mit einem durch einen Ein-Taster ausgelösten Impuls ein Ein- bzw. Ausschalten der Stromstoßspule ermöglicht wird und dadurch das Verfahren, die komplette stromsparende Sensorschaltung, ein- bzw. ausschaltet.

Im Folgenden wird die Erfindung anhand von Zeichnungen, die verschiedene Ausführungsbeispiele darstellen, näher erläutert.

Es zeigen:
- **Fig. 1**: Sechs Schaltungen eines Bewegungssensors nach dem Stand der Technik;
- **Fig. 2**: Ein erstes Ausführungsbeispiel als Wechselschaltung mit Steuermodul und Bewegungsmelder;
- **Fig. 3**: Eine Kontaktbelegung des Steuermoduls des ersten Ausführungsbeispiels;
- **Fig. 4**: Ein Schaltplan des Steuermoduls des ersten Ausführungsbeispiels;
- **Fig. 5**: Ein weiterer Schaltplan eines zweiten Ausführungsbeispiels einer Wechselschaltung mit Steuermodul, Nachlaufrelais und Bewegungsmelder;
- **Fig. 6**: Ein Schaltplan einer dritten Ausführungsbeispiels mit kaskadierter Schaltung mit zwei Wechselschaltungen, zwei Steuermodulen, einem Kommunikationsmodul und einem Bewegungssensor;
- **Fig. 7**: Ein Ausführungsbeispiel einer Kontaktbelegung eines Kommunikationsmoduls des dritten Ausführungsbeispiels;
- **Fig. 8**: Ein Ausführungsbeispiel eines Steuermoduls mit integriertem Stromstoßwechselschalter;
- **Fig. 9**: Ein Ausführungsbeispiel einer internen Schaltung eines Steuermoduls mit integriertem Stromstoßwechselschalter;
- **Fig. 10**: Ein Ausführungsbeispiel eines Steuermoduls mit integriertem Wechselschalter und zwei Kontrolllämpchen;
- **Fig. 11**: Ein weiteres Ausführungsbeispiel einer Wechselschaltung mit Steuermodul und Bewegungsmelder, bei dem der Stromstoßwechselschalter im Steuermodul integriert ist;
- **Fig. 12**: Ein weiteres Ausführungsbeispiel einer stromsparenden Wechselschaltung mit Steuermodul, Nachlaufrelais und Bewegungsmelder, bei dem der Stromstoßwechselschalter im Steuermodul integriert ist;
- **Fig. 13**: Ein weiteres Ausführungsbeispiel einer Kontaktbelegung eines Steuermoduls mit integriertem Wechselschalter und Nachlaufrelais;
- **Fig. 14**: Ein weiteres Ausführungsbeispiel einer Tasterschaltung mit Steuermodul und Bewegungsmelder, wobei im Steuermodul der Stromstoßwechselschalter integriert ist;
- **Fig. 15**: Ein weiteres Ausführungsbeispiel einer Tasterschaltung mit Steuermodul ohne Sensor;
- **Fig. 16**: Ein weiteres Ausführungsbeispiel einer Tasterschaltung mit externem Stromstoßschalter, Steuermodul und Bewegungssensor;
- **Fig. 17**: Ein weiteres Ausführungsbeispiel einer Tasterschaltung mit Bewegungssensor und externem Lastschütz zum Anschluss eines Elektroherdes;
- **Fig. 18****:** Ein Zeitdiagramm des Schaltverhaltens von Eingangskontakten eines Steuermoduls nach dem ersten Ausführungsbeispiel;
- **Fig. 19****:** Ein weiteres Zeitdiagramm des Schaltverhaltens von Eingangskontakten eines Steuermoduls nach dem ersten Ausführungsbeispiel bei manuellem Einschalten eines Wechselschalters;
- **Fig. 20****:** Ein weiteres Zeitdiagramm des Schaltverhaltens von Eingangskontakten eines Steuermoduls nach dem ersten Ausführungsbeispiel bei manuellem Ein- und Ausschalten eines Wechselschalters;
- **Fig. 21****:** Ein weiteres Zeitdiagramm des Schaltverhaltens von Eingangskontakten eines Steuermoduls nach dem ersten Ausführungsbeispiel bei Dauerbetätigung des Ein-Tasters 14;
- **Fig. 22****:** Ein weiteres Zeitdiagramm des Schaltverhaltens von Eingangskontakten eines Steuermoduls nach dem ersten Ausführungsbeispiel bei defektem Sensor und Betätigung des Ein-Tasters 14;
- **Fig. 23****:** Ein weiteres Zeitdiagramm des Schaltverhaltens von Eingangskontakten eines Steuermoduls nach dem ersten Ausführungsbeispiel bei Dauerbetätigung des Ein-Tasters 14;
- **Fig. 24****:** Ein weiteres Zeitdiagramm des Schaltverhaltens von Eingangskontakten eines Steuermoduls nach dem ersten Ausführungsbeispiel bei Betätigung des Aus-Tasters 15;
- **Fig. 25****:** Ein weiteres Zeitdiagramm des Schaltverhaltens von Eingangskontakten eines Steuermoduls nach dem ersten Ausführungsbeispiel bei Dauerbetätigung des Aus-Tasters 15;
- **Fig. 26****:** Ein Ausführungsbeispiel einer Schaltung mit einem in einem Bewegungsmelder integrierten Steuermodul.

**Fig. 1** zeigt sechs Schaltungen zum Stand der Technik, in denen ein Sensor, insbesondere ein Bewegungsmelder einen Verbraucher, in diesem Fall eine Lampe, schaltet. Der Sensor verfügt über einen Eingangskontakt für eine Sensornetzphase L und einen Eingangskontakt für einen Nullleiter N, sowie einen Ausgangskontakt für eine Sensorschaltphase L'. Der Sensor ist permanent am Netz angeschlossen und verbraucht einen geringen Ruhestrom. Detektiert der Sensor eine Bewegung, so schaltet er die Sensornetzphase auf die Sensorschaltphase durch, wodurch der Verbraucher bestromt wird, d.h. die Lampe leuchtet.

Neben dem gerade erläuterten Standardbetrieb ist auch eine Parallelschaltung mehrerer Bewegungsmelder zum Betrieb eines einzelnen Verbrauchers möglich. Hierzu werden die Sensorschaltphasen der einzelnen Sensoren miteinander verbunden. Wird der Sensor zum Betrieb einer induktiven Last, beispielsweise eines Transformators, eines Motors oder eines sonstigen induktiven Verbrauchers verwendet, so besteht die Möglichkeit parallel zum Verbraucher ein Löschglied, beispielsweise in Form einer Kapazität, zu schalten. Des Weiteren besteht die Möglichkeit, eine Dauerlichtfunktion dadurch zu erreichen, dass ein Schalter zwischen Sensornetzphase und Sensorschaltphase eingerichtet ist, die den Sensor überbrückt und somit den Verbraucher manuell einschaltet. Schließlich besteht die weitere Möglichkeit einer Parallelschaltung eines Treppenlichtautomaten parallel zum Sensor, um bei Betätigung mittels eines Tasters den Verbraucher für eine vorbestimmte Zeit durch den Treppenlichtautomaten einzuschalten, ohne dass hierzu der Sensor aktiviert sein müsste. Schließlich ergibt sich eine Schaltmöglichkeit eines Bewegungsmelders zum manuellen Aktivieren des Verbrauchers, in dem die Sensornetzphase des Bewegungsmelders kurzfristig durch einen Taster getrennt wird. Denn die herkömmlichen Bewegungsmelder des Stands der Technik werden nach Zuschalten der Sensornetzphase aktiviert und bleiben eine vorbestimmte Zeit nach der Zuschaltung der Sensornetzphase aktiv, das heißt geben Spannung an die Sensorschaltphase, bis sie über die vorbestimmte Zeit kein weiteres sensorauslösendes Ereignis detektiert haben, wonach sie die Sensorschaltphase abschalten.

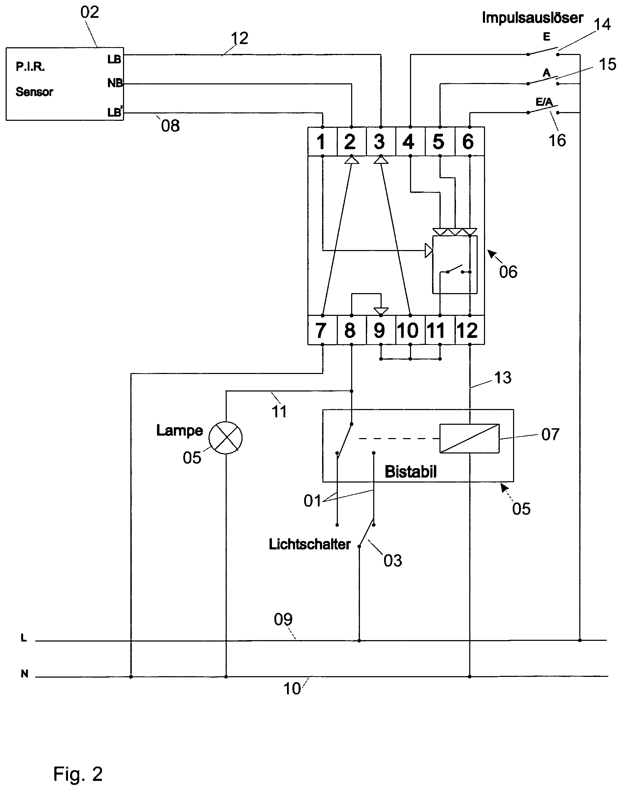

Ausgehend von den in **Fig. 1** gezeigten Grundschaltungen des Stands der Technik zeigt die Schaltung nach **Fig. 2** ein erstes Ausführungsbeispiel der Erfindung. Hierzu ist ein Steuermodul 06 über einen Wechselschalter 03 und die die beiden Korrespondierenden, die die Wechselschaltung 01 bilden, sowie einem als Wechselschalter fungierenden Stromstoßschalter 04 an die Netzphase 09 angeschlossen. Des Weiteren ist ein Bewegungsmelder, in diesem Fall ein PIR-Sensor 02 mit seiner Sensornetzphase 12 und seiner Sensorschaltphase 08 an dem Steuermodul 06 angeschlossen. Schließlich ist am Ausgangskontakt des Stromstoßwechselschalters 04, an dem das Steuermodul 06 angeschlossen ist, auch der als Lampe ausgeführte Verbraucher 05 an die Verbraucherphase 11 angeschlossen. Der Verbraucher 05 sowie das Steuermodul 06 sind des Weiteren mit dem Nullleiter 10 verbunden. Darüber hinaus verfügt das Steuermodul 06 über drei Tastereingänge, an den ein Ein-Taster 14, ein Aus-Taster 15 und ein Ein-/Austaster 16 angeschlossen sind. Eine Betätigung des Eintasters 14 erzwingt ein Einschalten des Verbrauchers, sofern der Verbraucher 05 zuvor stromlos war. Ist der Verbraucher 05 bestromt, so zwingt ein Tasterdruck auf den Aus-Taster 15 ein Ausschalten des Verbrauchers 05. Eine Betätigung des Ein-/Austasters 16 erzwingt ein Ein- bzw. Ausschalten des Verbrauchers 05.

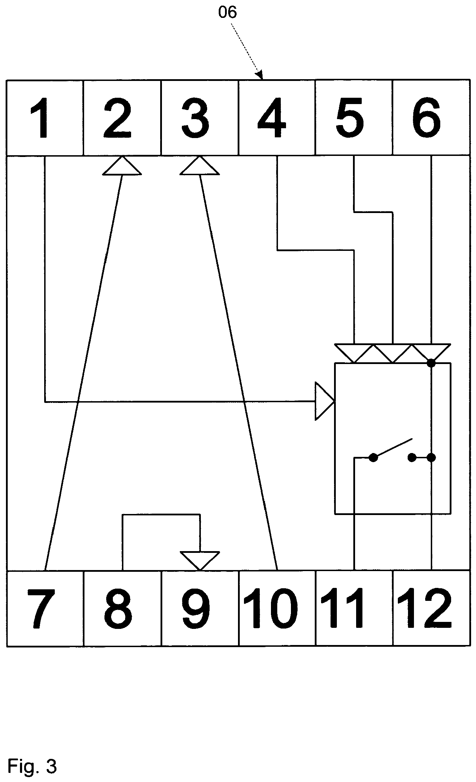

**Fig. 3** zeigt die Kontaktbelegung der äußeren Beschaltung des Steuermoduls 06.

In **Fig. 4** ist die innere Schaltung des Steuermoduls 06 dargestellt. In Verbindung mit der externen Beschaltung des Steuermoduls, die in **Fig. 2** dargestellt ist, soll im Nachfolgenden die Wirkungsweise der Schaltung erläutert werden. Zunächst befindet sich der Verbraucher im ausgeschalteten Zustand, dies bedeutet, dass die Verbraucherphase 11 stromlos ist und Steuermodul 06 sowie Sensor 02 ausgeschaltet sind. Wird nun der Wechselschalter 03 umgeschaltet, so erhält Verbraucher 05 und Steuermodul 06 Spannung über den Wechselschalter 03, die aktive korrespondierende Leitungen der Wechselschaltung 01 und den Wechselkontakt des Stromstoßschalters 04. Somit liegt an den Eingangsklemmen 8, 9, 10, 11 und 3 des Steuermoduls 06 die aktive Verbraucherphase 11 an. Der Sensor 02 bekommt hierdurch über die Netzphase 12 Spannung und wird eingeschaltet. Der Sensor 02 ist dabei so eingerichtet, dass er die Sensornetzphase 12 beim Einschalten zur Sensorschaltphase 08 durchschaltet und über eine vorbestimmte Zeit bestromt hält, bis kein sensorauslösendes Ereignis eintritt. An der Sensorschaltphase 08 ist über den Kontakt 1 des Steuermoduls 06 die Spule eines monostabilen Relais R1 18 angeschlossen. Erhält diese über den zweiten Spulenkontakt 31 Spannung, wobei der erster Spulenkontakt 24 über die Anschlussklemme 2 des Sensormoduls 06 mit dem Nullleiter 10 verbunden ist, so zieht das Relais 18 an. Hierdurch wird der Eingangskontakt 22 geschlossen und der Wechselkontakt 20 umgeschaltet. Durch Schließen des Einschaltkontakts 22 wird die zweite Eingangsklemme 32 des monostabilen Schaltrelais R2 19 unter Spannung gesetzt, sodass das Relais R2 19 ebenfalls anzieht. Dies bewirkt, dass der Einschaltkontakt 23 sowie der Wechselkontakt 21 des Relais R2 19 anziehen. Der aktivierte Einschaltkontakt 23 bewirkt eine Selbsthaltung des Relais R2 19. Die am Ausgangskontakt 25 des Wechselkontakts 20 des Relais R1 18 angeschlossene Stromstoßspule 07 über die Schaltphase 13 der Stromstoßspule 07 hat während des Einschaltvorgangs keine Spannung erhalten, da zunächst der Wechselkontakt 20 von R1 und erst danach der Wechselkontakt 21 von R2 umgeschaltet hat. Somit ist die Verbraucherphase eingeschaltet und der Sensor 02 aktiv.

Erkennt der Sensor 02 über eine vorbestimmbare Zeit kein sensorauslösendes Ereignis, so schaltet er die Sensorschaltphase 08 ab. Hierdurch fällt das Schaltrelais R1 18 ab und der Einschaltkontakt 22 öffnet, sowie der Wechselkontakt 20 schaltet auf die Schaltstellung 26 - erster Ausgangskontakt des Wechselkontakts von R1. Während dieser Zeit bleibt das zweite Relais R2 19 weiterhin durch die Selbsthaltung des Einschaltkontakts 23 angezogen, sodass der Wechselkontakt 21 auf dem zweiten Ausgangskontakt 30 liegt. Somit ist nach dem Abfall des Relais 18 R1 eine leitende Verbindung zwischen dem mit der Verbraucherphase 11 verbundenen Kontakt 11 des Sensormoduls 06 und der Schaltphase 13 der Stromstoßspule 07 hergestellt. Die Stromstoßspule 07 erhält über Verbraucherphase 11 Wechselkontakt 21 im aktiven Zustand und Wechselkontakt 20 im abgefallenen Zustand einen Spannungsimpuls und schaltet den Wechselkontakt des Stromstoß-Wechselschalters 04 um. Hierdurch wird die Verbraucherphase 11 spannungslos geschaltet, wodurch das Schaltrelais R2 19 abfällt. Das gesamte Steuermodul 06, sowie Sensor 02 und Verbraucher 05 sind nun wieder stromlos und die Schaltung hat sich selbst abgeschaltet.

Im Nachfolgenden wird die Wirkungsweise der drei Taster 14, 15 und 16 erläutert:
Befindet sich die Schaltung im ausgeschalteten Zustand, so ist der Eingangskontakt 4 des Steuermoduls 06 über den ersten Wechselkontakt 29 des Wechselkontakts 21 von R2 19 und den ersten Eingangskontakt 26 des Wechselkontakts 20 von R1 18 mit der Schaltphase 13 der Stromstoßspule verbunden. Wird der Ein-Taster 14 betätigt, wird kurzfristig die Netzphase 09 mit der Schaltphase 13 der Stromstoßspule 07 verbunden, was ein Umschalten des Stromstoß-Wechselschalters 04 bewirkt, sodass die Verbraucherphase 11 unter Spannung gesetzt wird. Die Schaltung wird dadurch eingeschaltet.

Ist die Schaltung eingeschaltet, so ist der Wechselkontakt 20 des Relais R1 18 mit dem zweiten Wechselkontakt 27 verbunden. Somit entsteht eine leitende Verbindung zwischen Eingangskontakt 5 des Steuermoduls 6 und der Schaltphase 13 des Stromstoß-Wechselschalters. Durch Betätigung des Aus-Tasters 15 wird die Netzphase 09 mit der Schaltphase 13 des Wechselschalters 04 verbunden, sodass der Stromstoß-Wechselschalter 04 einen Spannungsimpuls erhält und umschaltet. Hierdurch wird bei aktiver Verbraucherphase 11 die gesamte Schaltung aus Steuermodul 06, Verbraucher 05 und Sensor 02 abgeschaltet, die Schaltung ist stromlos.

Der Ein-/Austaster 16 ist mit dem Eingangskontakt 6 des Steuermoduls 06 und somit direkt mit der Schaltphase 13 des Stromstoß-Wechselschalters 04 verbunden. Eine Betätigung des Ein-/Ausschalters 16 gibt somit direkt einen Schaltimpuls auf die Stromstoßspule 07 des Stromstoß-Wechselschalters 04 und zwingt diesen zum Umschalten. Somit wird bei jeder Betätigung des Tasters 16 die Schaltung ein- bzw. ausgeschaltet. Die drei Taster 14, 15 und 16 ermöglichen eine zentrale Ein-, Aus- oder Ein-/Ausschaltung unabhängig vom Betriebsverhalten des Sensors 02.

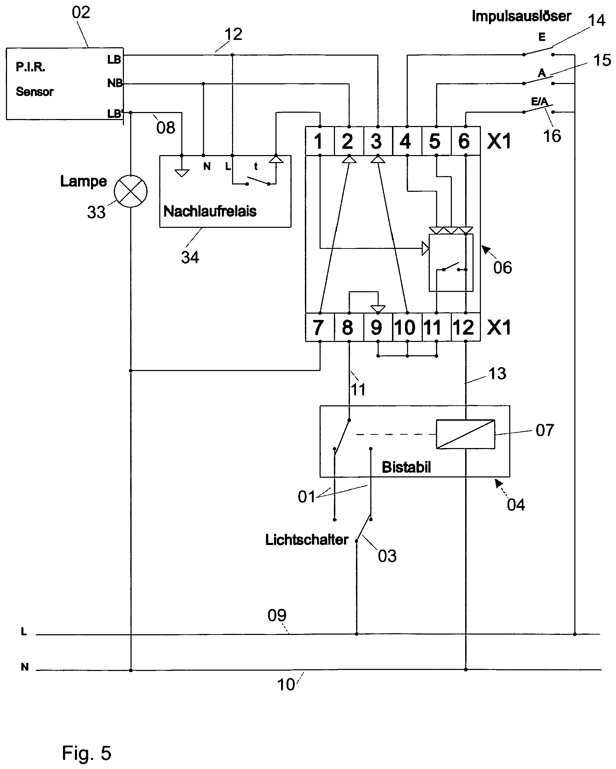

In **Fig. 5** ist ein weiteres Ausführungsbeispiel einer erfindungsgemäßen Schaltung dargestellt. Die Schaltung nach **Fig. 5** entspricht dabei im Wesentlichen der Schaltung nach **Fig. 1**, jedoch ist in der Sensorschaltphase 08 ein Nachlaufrelais 34 eingeschaltet, das bei aktivierter Verbraucherphase 11 eine minimale aktive Einschaltzeit des Steuermoduls 08 garantiert. Hierzu wird das Nachlaufrelais 34 von der Sensorschaltphase 08 aktiviert, und gibt dann die Sensornetzphase für eine vorbestimmte Zeit auf den Eingangskontakt der Sensorschaltphase 08 des Steuermoduls 06. Abweichend von der Schaltung nach **Fig. 1** ist ein Verbraucher 33 nunmehr direkt an die Schaltphase 08 des Sensors 02 angeschlossen. Dabei wird der Verbraucher 33 nicht direkt über die Verbraucherphase 11 mit Spannung versorgt, sondern erhält seine Betriebsspannung mittelbar über Schaltkontakte des Sensors 02. Eine solche Schaltung ist jedenfalls dann zu bevorzugen, wenn der Verbraucher unmittelbar in der Nähe des Sensors angeordnet ist. Das Nachlaufrelais 34 bewirkt, dass das Steuermodul 06 erst dann ausgeschaltet wird, wenn die Zeit des Nachlaufrelais 34 abgelaufen ist, so dass es möglich ist, das Steuermodul 06 eine längere Zeit als die vom Sensor 02 einstellbare Zeit in Betrieb zu halten. Je nachdem, ob ein Verbraucher 33, wie in **Fig. 5** dargestellt, direkt am Ausgang der Sensorschaltphase 08 angeschlossen ist, oder, wie in **Fig. 2** gezeigt, ein Verbraucher 05 an der Verbrauchernetzphase 11 angeschossen ist, ist der Verbraucher so lange in Betrieb, wie es die voreinstellbare Zeit des Sensors 02 bzw. des Nachlaufrelais 34 vorgibt.

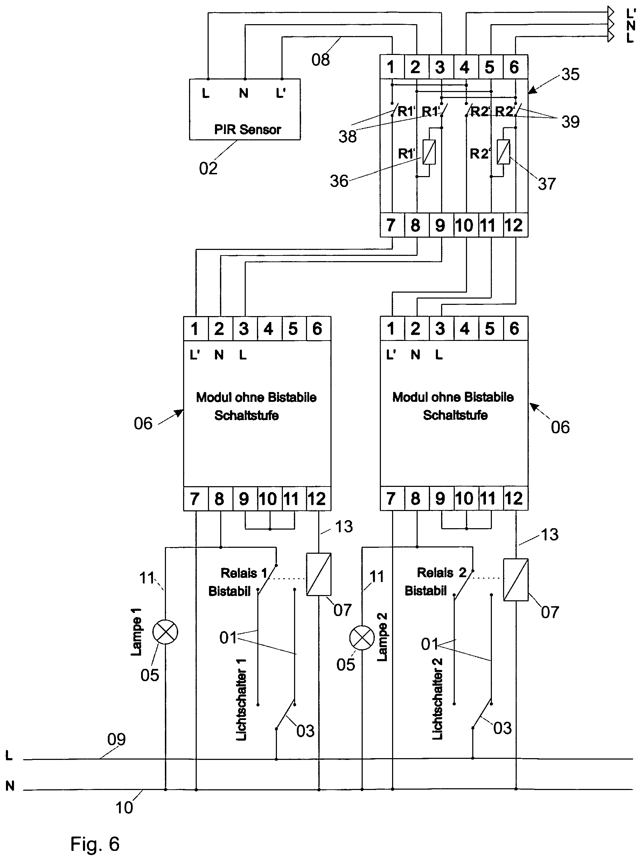

**Fig. 6** zeigt eine Erweiterungsschaltung des Steuermoduls 06 mit Sensor 02. Hierzu sind zwei Wechselschaltungen 01 mit Verbrauchern 05 und Wechselschaltern 03 sowie Stromstoßschalter mit Stromstoßspulen 07 parallel an zwei Steuermodule 06 angeschlossen. Die Ausgänge der Steuermodule 06 für die Sensornetzphase 12, den Sensor-Nullleiter und Sensorschaltphase 08 sind mit dem Eingang eines Kommunikationsmoduls 35 verbunden. Im Inneren des Kommunikationsmoduls 35 befindet sich eine Schaltung umfassend zwei Relais R1 36, R2 37, die zwischen Sensor-Nullleiter und Sensornetzphase des jeweilig zugeordneten Steuermoduls 06 angeschlossen sind. Die beiden Relais umfassen zwei Einschaltkontakte 38 R1' und 39 R2', die bei Bestromung der Sensornetzphase des jeweiligen Steuermoduls 06 die Sensornetzphase 12 und Sensorschaltphase 08 zum Sensor 02 durchschalten. Je nachdem welcher Wechselschalter 03 zuerst betätigt wird, aktiviert das Steuermodul 06 durch die Spannung der Sensornetzphase das zugeordnete Relais 36, 37 des Kommunikationsmoduls 35 und schaltet die Versorgungsspannung 12 sowie die Sensorschaltphase 08 an den Sensor 02 durch. Mit Hilfe dieser Schaltung können unabhängig zwei Verbraucher 05 mittels zweier Steuermodule 06 durch einen einzelnen Sensor 02 geschaltet werden.

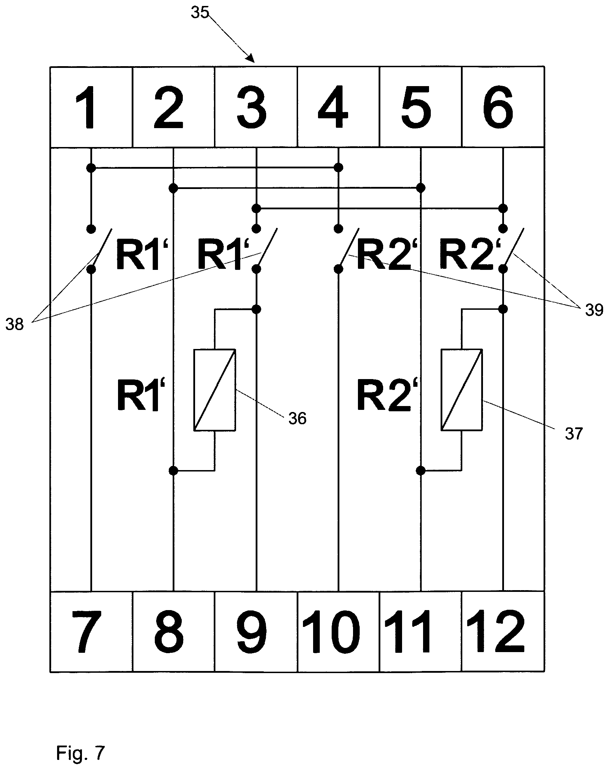

**Fig. 7** zeigt die innere Struktur des Kommunikationsmoduls 35. Deutlich zu erkennen sind die beiden Spulen R1' 36, R2' 37, die jeweils an den Eingangskontakten für Sensornetzphase 12 und Nullleiter 10 des jeweilig zugeordneten Kommunikationsmoduls 35 angeschlossen sind. Wird die Sensornetzphase 12 durch ein aktiviertes Steuermodul 06 unter Spannung gesetzt, so zieht das jeweilig zugeordnete monostabile Relais 36, 37 an und schließt die beiden Schließer 38 bzw. 39, die Sensornetzphase 12 und Sensorschaltphase 08 an die Ausgangskontakte 1, 3 des Kommunikationsmoduls 35 weiterleiten, an denen ein Sensor 02 angeschlossen werden kann.

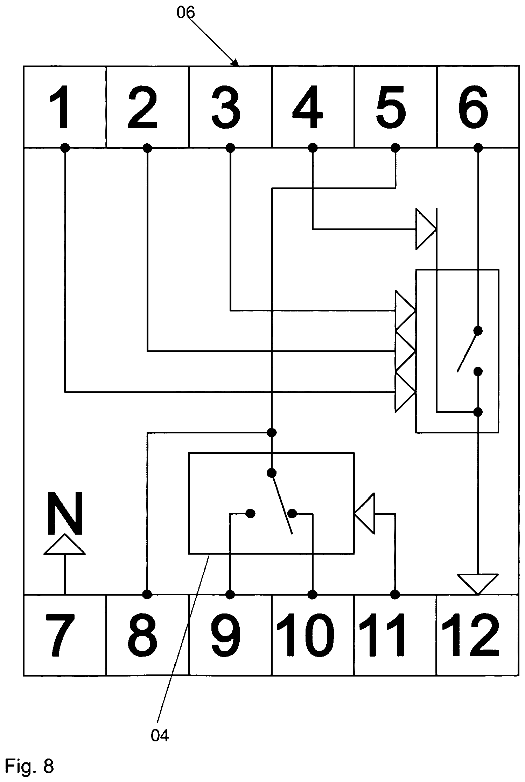

**Fig. 8** zeigt ein weiteres Ausführungsbeispiel eines Steuermoduls 06 mit einem integrierten Stromstoß-Wechselschalter 04. Dabei befindet sich der Stromstoß-Wechselschalter 04 im Inneren des Gehäuses des Steuermoduls 06, sodass sich eine geänderte Nummerierung der Anschlusskontakte 1 bis 12 ergibt.

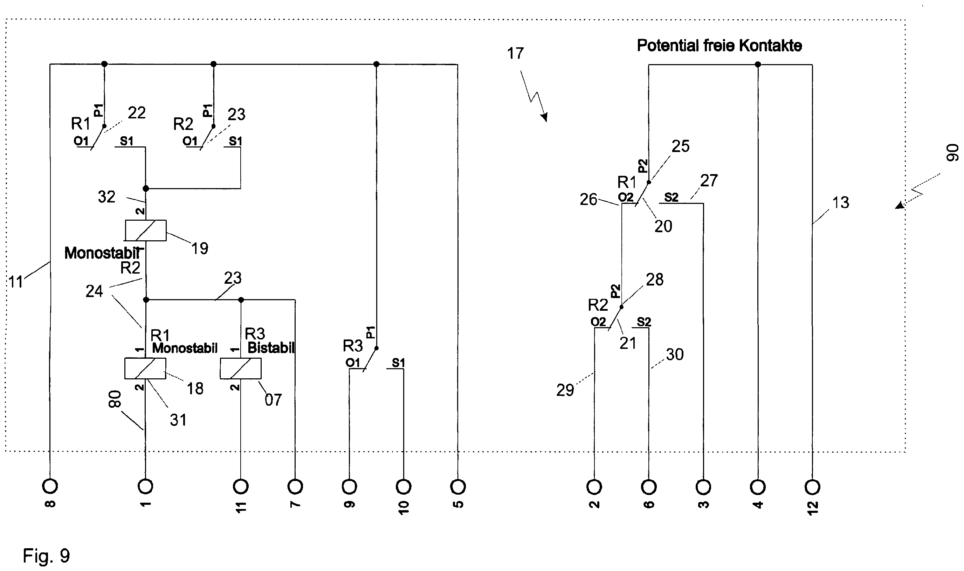

**Fig. 9** zeigt bezüglich der Ausgestaltung des Steuermoduls nach **Fig. 8** die interne Schaltung des mit einem Stromstoß-Wechselschalter kombinierten Steuermoduls 06. Grundsätzlich beruht die in **Fig. 9** dargestellte Schaltung auf dem in **Fig. 4** dargestellten Ausführungsbeispiel. Lediglich die Eingangsbezeichnungen der Kontakte haben sich geändert, sowie die Stromstoßspule 07 des bistabilen Stromstoßschalters K3 07 sind in die Schaltung aufgenommen, sowie der Wechselschalterkontakt von K3 ist über die Klemmen 9, 10 und 5 nach außen anschließbar. An den Klemmen 5 oder 8 kann die Verbraucherphase 11 angeschlossen werden. Wird der Sensor 02 aktiviert, so gibt er über den Kontakt 1 seine Sensorschaltphase 08 an die Relaisspule 18 des Schaltrelais R1 18 weiter. Das Schaltrelais R1 18 schaltet ein und bestromt damit die Spule des Schaltrelais 19, das sich durch seinen Einschaltkontakt 23 selbst hält. Die potentialfreien Kontakte 20, 21, die die Schaltphase 13 der Stromstoßspule steuern, arbeiten dabei wie im Zusammenhang mit **Fig. 4** beschrieben. Dabei ist der Ausgangskontakt 12 im normalen Schaltungsbetrieb mit dem Eingangskontakt 11 verbunden, sodass die Schaltphase 13 an die Spule 07 des Stromstoßschalters R3 weitergeleitet werden kann.

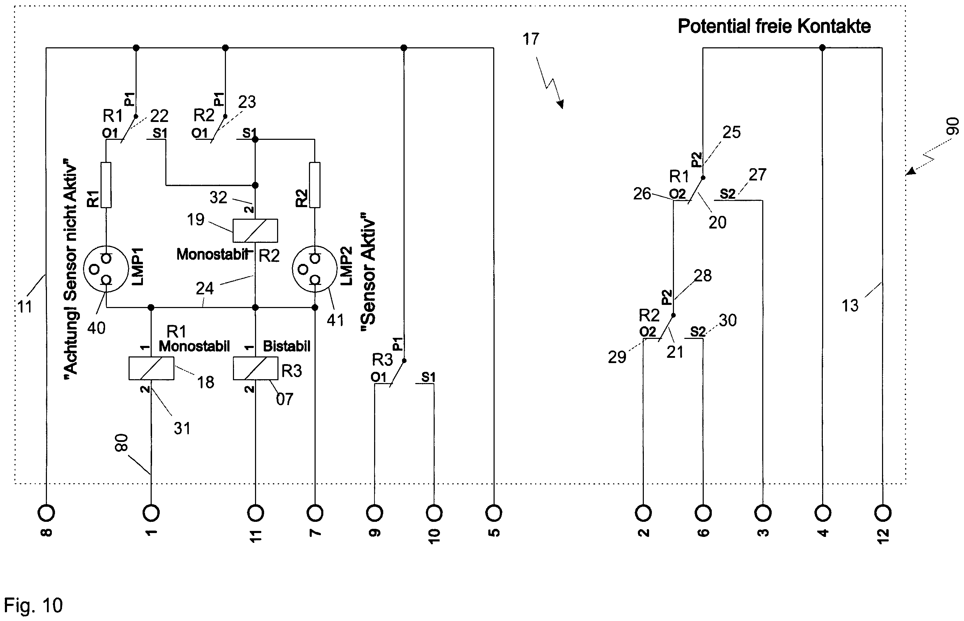

Des Weiteren zeigt **Fig. 10** eine Erweiterung der in **Fig. 9** dargestellten Schaltung. Diese ist durch eine Kontrolllampe 41, die parallel zum monostabilen Relais R2 19 geschaltet ist, sowie eine Kontrolllampe 40, die einen ersten Ausgangskontakt des Einschaltkontakts R1 22 des Schaltrelais R1 18 mit dem Nullleiter verbindet, erweitert worden. Die Kontrolllampe LMP1 40 zeigt die Schaltstellung, wenn der Sensor nicht aktiv ist, die Schaltung dennoch unter Spannung steht. Dies ist beispielsweise dann der Fall, wenn der Sensor 02 ausgefallen ist, und nicht wie vorgesehen beim Einschalten der Verbrauchernetzphase 11 aktiviert wird. Damit zeigt die Kontrolllampe LMP1 40 ein Fehlverhalten des Sensors 02 an.

Die zweite Kontrolllampe LMP2 41 ist parallel zum Relais R2 19 geschaltet und signalisiert eine Aktivierung des Relais R2 19 und damit eine Aktivierung des Sensors 02. Leuchtet die Lampe LMP2 41, so weist sie darauf hin, dass der Sensor 02 aktiv ist und entweder ein sensorauslösendes Ereignis erkannt hat bzw. die vorgegebene Zeit bis zur Abschaltung noch nicht abgelaufen ist.

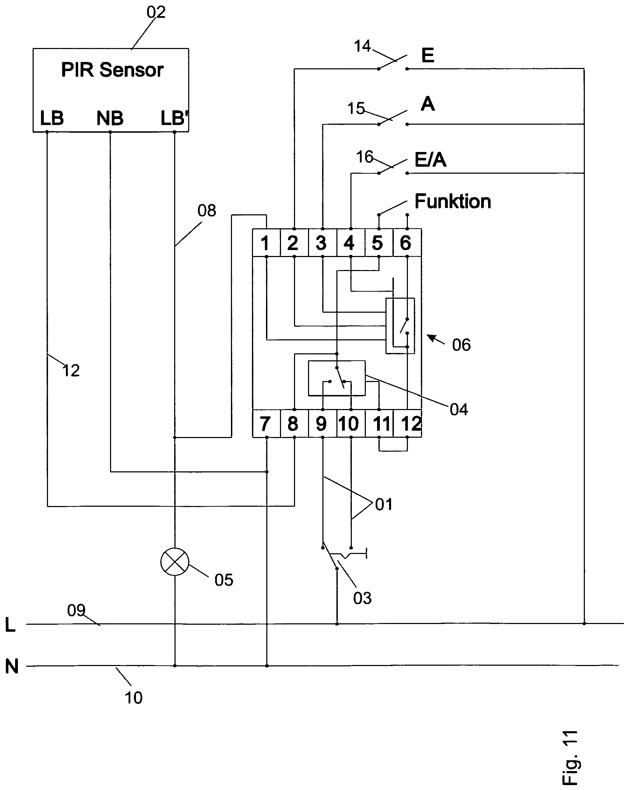

Die **Fig. 11** zeigt ein weiteres Ausführungsbeispiel einer erfindungsgemäßen Schaltung, bei der ein Steuermodul 06 mit integriertem Wechselschalter zum Einsatz kommt. Die grundsätzliche Beschaltung der in **Fig. 11** dargestellten Sensorschaltung entspricht der in **Fig. 2** dargestellten Schaltung. Jedoch ist auf Grund der internen Aufnahme des Stromstoßwechselschalters 04 in das Steuermodul 06 die Nummerierung der Anschlusskontakte des Steuermoduls 06 geändert.

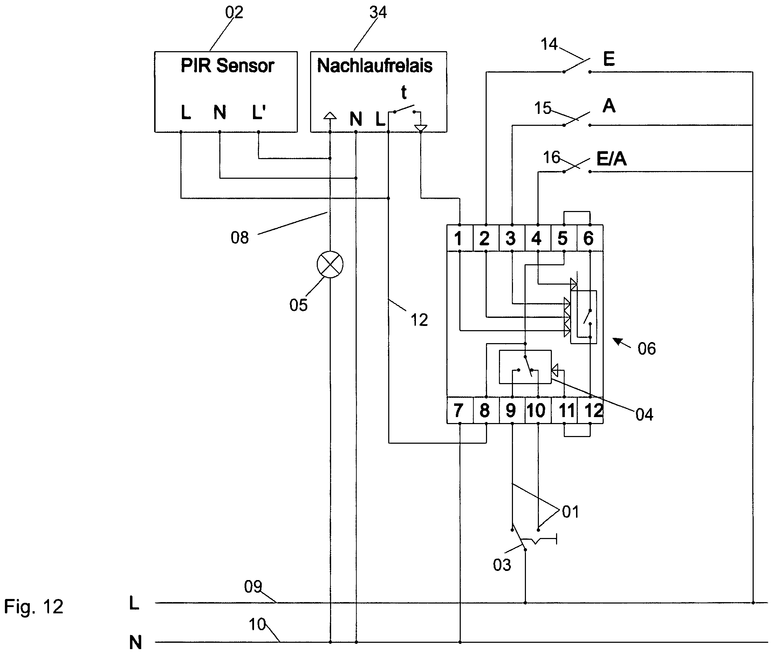

In **Fig. 12** ist die in **Fig. 11** dargestellte Schaltung um ein zwischengeschaltetes Nachlaufrelais 34, das in die Sensorschaltphase 08 eingeschaltet ist und das eine Mindestlaufzeit des Verbrauchers 05 garantiert, erweitert. Des Weiteren ist der Verbraucher 05 nicht direkt an die Verbraucherphase 11 angeschlossen, sondern mit der Sensorschaltphase 08 verbunden, sodass der Strom des Verbrauchers 05 über die internen Kontakte des Sensors 02 fließt.

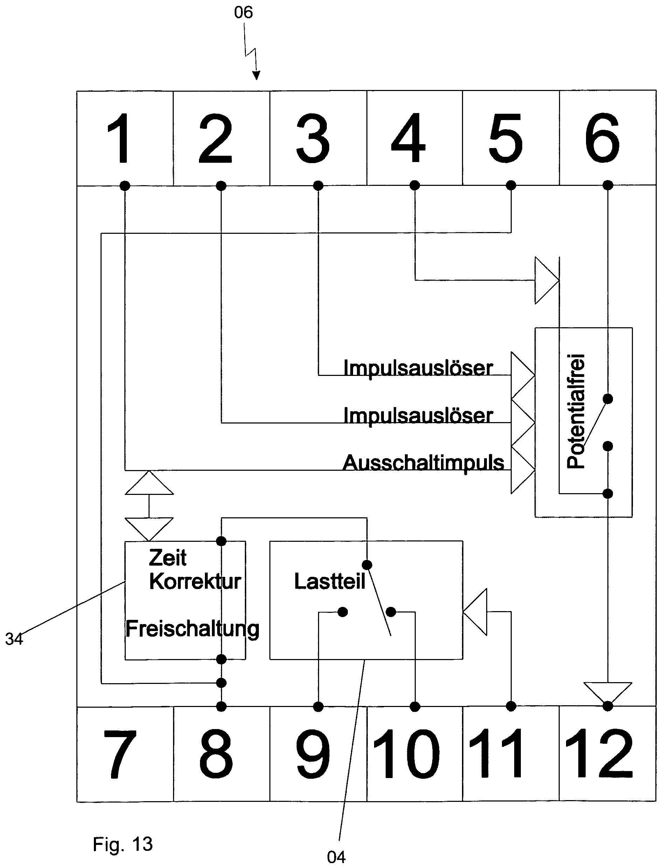

**Fig. 13** zeigt die interne Beschaltung eines Ausführungsbeispiels des Steuermoduls 06 mit integriertem Stromstoß-Wechselschalter 04 und Nachlaufrelais 34, sodass dieses Ausführungsbeispiel des Steuermoduls in der in **Fig. 12** dargestellten Schaltung eingesetzt werden kann.

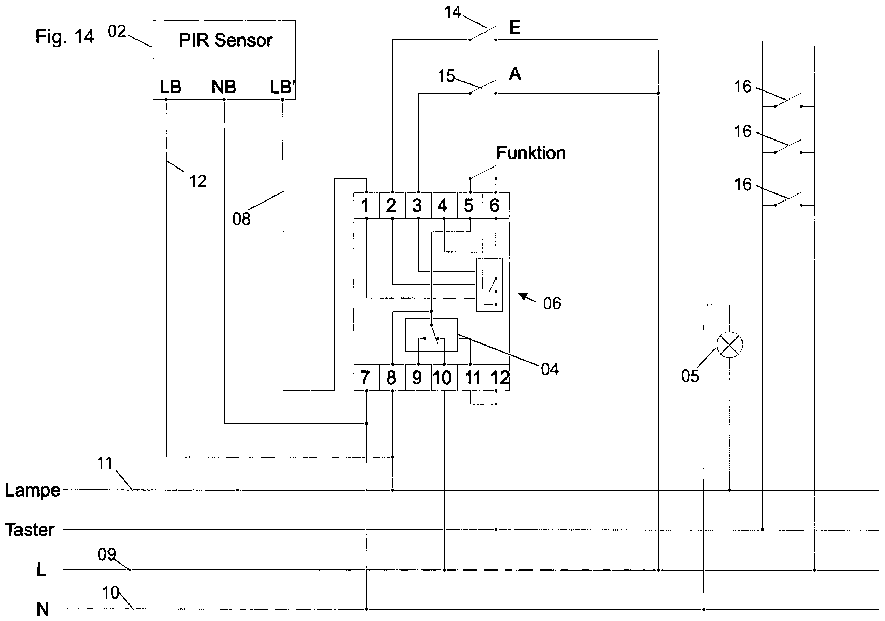

**Fig. 14** zeigt ein weiteres Ausführungsbeispiel eines Steuermoduls 06 mit Sensor 02, wobei statt einer Wechselschaltung eine Tasterschaltung umfassend die Taster 16 und den Stromstoß-Wechselschalter 04 die Verbraucherphase aktivieren, sodass der Sensor 02 über das Steuermodul 06 bestromt wird und nach Erkennen keines sensorauslösenden Ereignisses über eine gewisse Zeit über die Sensorschaltphase 08 das Steuermodul 06 und damit die Verbraucherphase 11 wieder ausschaltet. Hierzu ist die Stromstoßspule des Stromstoß-Wechselschalters 04 mit der Tasterleitung, die über die Taster 16 mit der Netzphase 09 verbindbar ist, verbunden. Durch Betätigung der Taster 16 schaltet der Stromstoß-Wechselschalter um und gibt somit an die interne Verbraucherphase die Netzphase 09 weiter. Die Schaltung wird aktiviert und erhält über den Ausgangskontakt 8 des Steuermoduls 06 Spannung, sodass der Verbraucher 05 eingeschaltet wird und die Sensornetzphase 12 unter Spannung steht. Hierdurch wird der Sensor 02 aktiv und schaltet, nachdem er nach einer vorbestimmten Zeit kein sensorauslösendes Ereignis festgestellt hat, die Sensorschaltphase 08 ab. Dieses Abschalten bewirkt, dass das Steuermodul 06 intern einen Spannungsimpuls an die Spule des Stromstoß-Wechselschalters 04 abgibt, sodass dieser wieder umschaltet und die gesamte Schaltung stromlos macht.

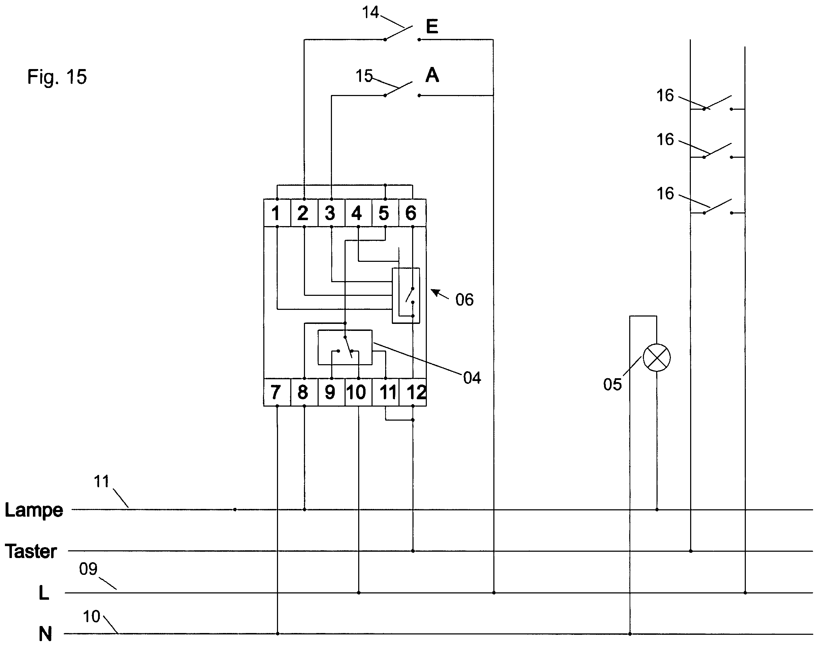

Schließlich zeigt **Fig. 15** eine Schaltung mit Steuermodul 06, an der kein Sensor angeschlossen ist. Hierzu wird der Eingangskontakt der Sensornetzphase 1 direkt mit den Ausgangskontakten 5 und 6 des Steuermoduls 06 verbunden, die mit der Verbraucherphase 11 in Kontakt stehen. Somit fungiert diese Schaltung als reine Tasterschaltung, da die Sensorschaltphase, die am Eingangskontakt 1 des Steuermoduls 06 anzulegen hat, direkt mit der Verbraucherphase verbunden ist. Die beiden Taster 14 und 15 bewirken ein zentrales Ein- bzw. ein zentrales Ausschalten der Verbraucherphase.

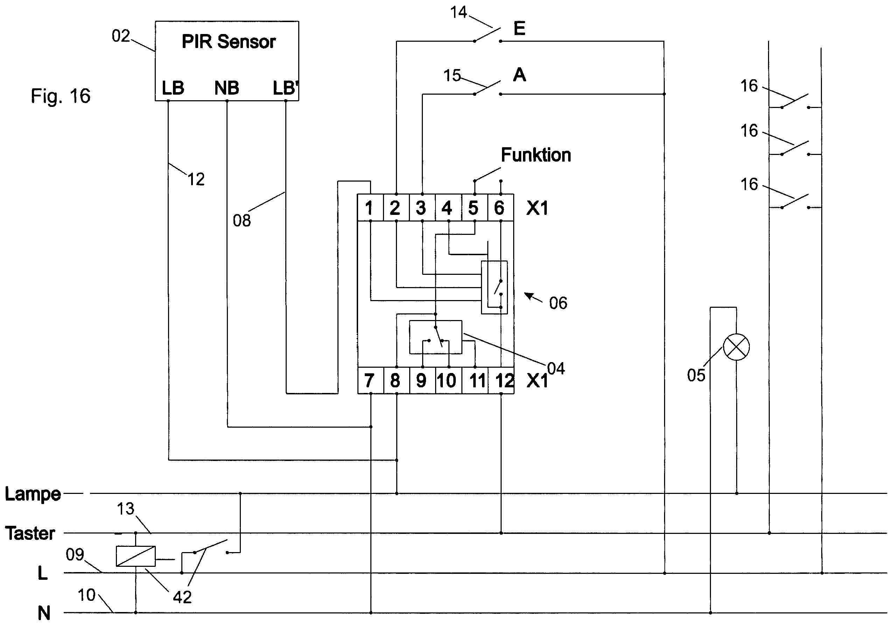

**Fig. 16** zeigt ein weiteres Ausführungsbeispiel der Erfindung, wobei im Steuermodul 06 der Wechselschalter 04 integriert ist. Diese Schaltung bedient sich eines externen Stromstoßschalters 42, beispielsweise eines bereits in einer vorhandenen Installation vorgesehenen Stromstoßschalters. Die Schaltphase der Stromstoßspule 13 ist hierzu an den Kontakt 12 des Steuermoduls 06 angeschlossen, sodass der interne Stromstoß-Wechselschalter 04 ohne Funktion ist. Dessen Funktion wird von dem externen Stromstoßschalter 42 übernommen. Ansonsten entspricht diese Schaltung dem in **Fig. 14** dargestellten Ausführungsbeispiel.

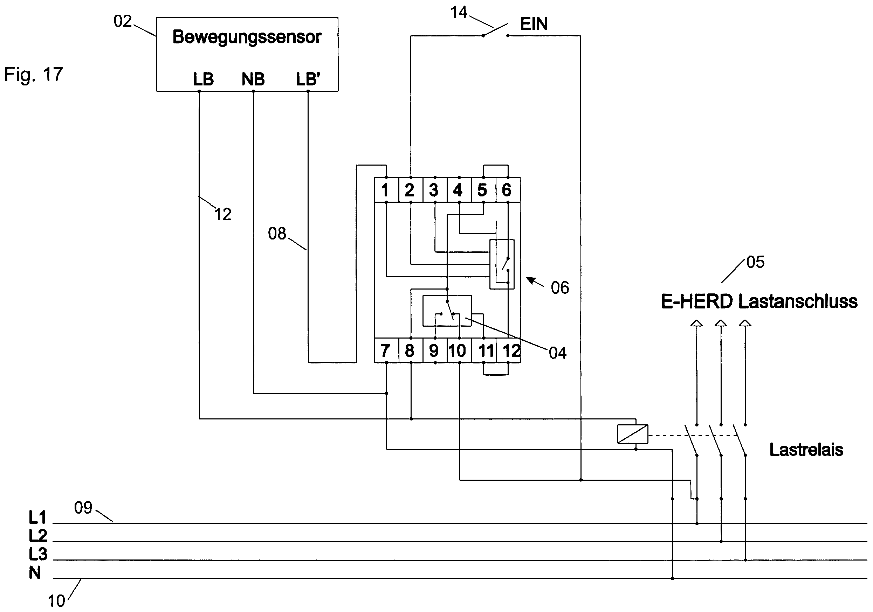

Schließlich zeigt die in **Fig. 17** dargestellte Schaltung ein Ausführungsbeispiel, das statt eines Verbrauchers ein weiteres Lastrelais aufweist, mit dem ein Verbraucher hoher Leistung, beispielsweise ein E-Herd 05, geschaltet werden kann. Diese Schaltung kommt ohne externe Schalter aus und verwendet zur Einschaltung den zentralen Einschalttaster 14. Wird der Einschalttaster 14 betätigt, so wird der Stromstoßschalter 04, wie bereits vorher besprochen, eingeschaltet und der Bewegungssensor 02 aktiviert. Das Einschalten des Stromstoß-Wechselschalters 04 bewirkt eine Bestromung der am Kontakt 8 des Steuermoduls 06 angeschlossenen Sensornetzphase und ein Anziehen des Lastrelais, sodass der E-Herd 05 dreiphasig bestromt wird. Stellt der Sensor 02 über eine längere Zeit keine Bewegung fest, so schaltet er das Steuermodul 06 ab, sodass der E-Herd 05 wieder stromlos wird. Eine solche Schaltung kann beispielsweise auch als Überwachungsschaltung zur Überwachung komplexer Maschinen oder gefährlicher Anlagen eingesetzt werden, bei der durchgängig ein Bedienpersonal den Sensor 02 aktiv halten muss. Diese Schaltung eignet sich deshalb in besonderer Weise für Überwachungsaufgaben.

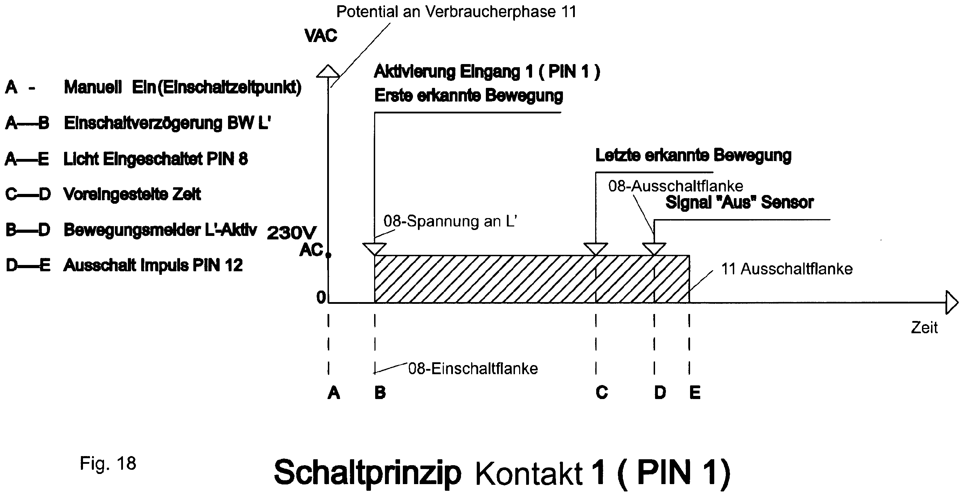

**Fig. 18** zeigt ein Zeitdiagramm, dass die einzelnen Zeitabschnitte nach Einschalten der Verbraucherphase 11 bis zum Ausschalten der Verbraucherphase 11 durch den Sensor 02 darstellt. Die Bezugszeichen dieser und der nachfolgenden Figuren beziehen sich auf die in **Fig. 2** dargestellte Schaltung. Am Zeitpunkt A wird die Verbraucherphase mittels eines Wechselschalters 03 eingeschaltet, so dass das Potential der Verbraucherphase 11 auf 230 V AC liegt und der Verbraucher 05 eingeschaltet ist. Gleichzeit erhält der Sensor 02 über die Sensornetzphase 12 Spannung. Wie bereits weiter oben erläutert, schaltet der Sensor 02 erst nach einer gewissen Verzögerung zum Zeitpunkt B die Sensorschaltphase 08 zu. Zu diesem Zeitpunkt wird der Eingang 1 des Steuermoduls 06 aktiviert. Im Steuermodul zieht somit zunächst Relais R1 18 und dadurch Relais R2 19 an. Im Sensor läuft ab Zeitpunkt B eine voreinstellbare Zeit ab, während der der Sensor 02 eine Bewegung erkennen kann, und weiterhin die Sensorschaltphase 08 aktiv hält. Dies geschieht im Zeitraum vom Zeitpunkt B bis Zeitpunkt C. Nach Zeitpunkt C stellt der Sensor jedoch kein weiteres sensorauslösendes Signal fest. Somit schaltet der Sensor 02 nach Verstreichen der voreingestellten Zeit - in diesem Fall vom Zeitpunkt C bis Zeitpunkt D, die Sensorschaltphase 08 ab. Nun fällt im Steuermodul 02 zunächst das Relais R1 18 ab, so dass die Wechselkontakte von R1 20 und R2 21 so gestellt sind, dass ein Stromimpuls an die Schaltphase der Stromstoßspule 13 ab. Der Stromstoßspule 04 schaltet dann am Zeitpunkt E die Verbraucherphase 11 ab, wodurch schließlich auch das Relais R2 21 abfällt und die Schaltung stromlos geschaltet ist.

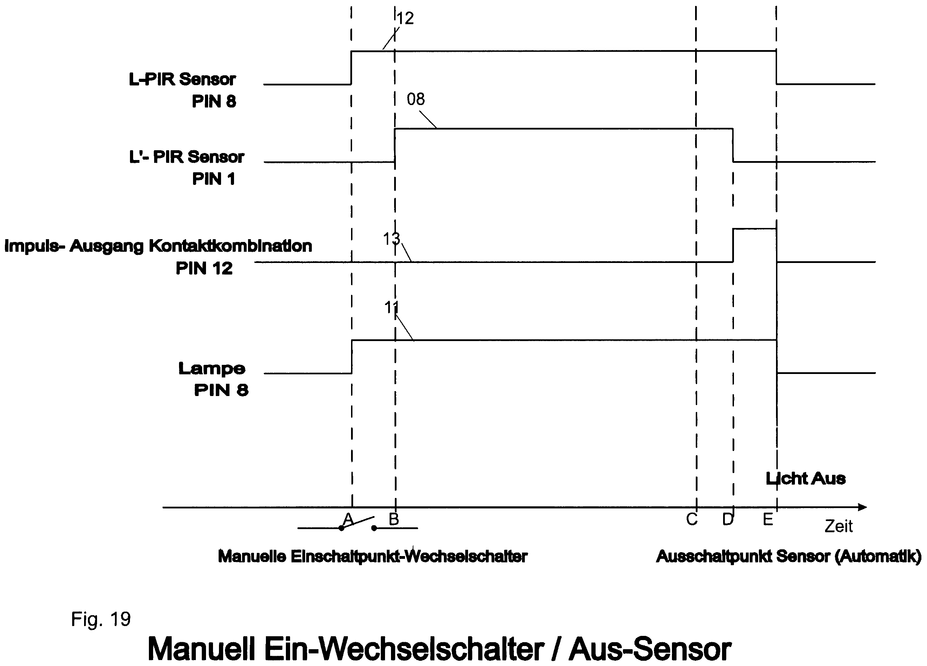

**Fig. 19** stellt den zeitlichen Verlauf der Spannungen an verschiedenen Pins der Schaltung nach **Fig. 2** dar. Der zeitlich Verlauf der einzelnen Spannungen und deren Wirkungsweise an den Zeitpunkten A bis E ist bereits im Zusammenhang mit der **Fig. 18** beschrieben worden.

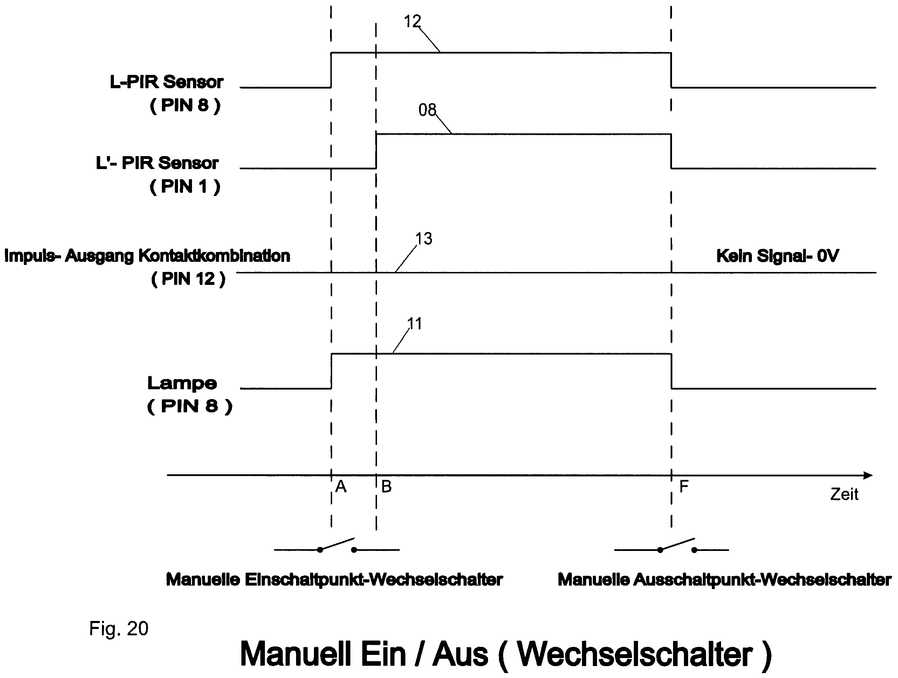

**Fig. 20** stellt einen der **Fig. 19** entsprechenden Verlauf der Spannungen der verschiedenen Pins des Steuermoduls 06 nach **Fig. 2** dar. In diesem Szenario wird jedoch die Schaltung nicht durch den Sensor 02 abgeschaltet, sondern im Zeitraum B bis C erkennt der Sensor 02 eine Bewegung, und am Zeitpunkt F wird manuell durch Betätigung des Wechselschalters 03 die Schaltung stromlos geschaltet, so dass alle Potentiale sofort 0 V einnehmen.

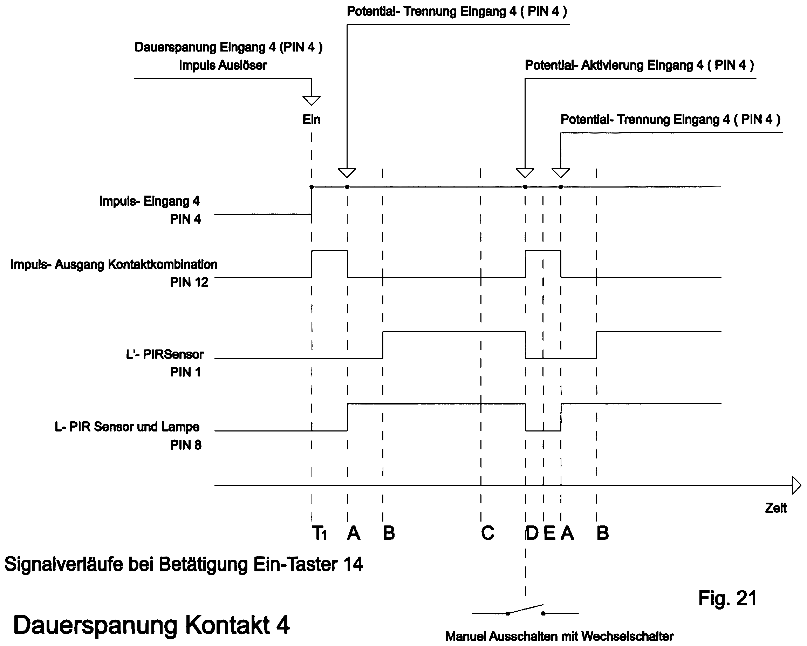

**Fig. 21** stellt ein Schaltszenario bei permanenter Betätigung des Ein-Tasters 14 dar. Zum Zeitpunkt T₁ wird der Ein-Taster 14 gedrückt. Da die beiden Wechselkontakt 20, 21 der beiden Relais R1 18, R2 19 in Ruhestellung waren, gibt der Taster 14 ein Stromimpuls über die Schaltphase 14 an den Stromstoßschalter 04 ab. Dieser schaltet am Zeitpunkt A um und somit die Verbraucherphase 11 ein. Danach schließen sich die schon aus **Fig. 19** bekannten Zeitverläufe A bis E an. Am Zeitpunkt D fällt die Sensorschaltphase 08 ab, so dass am Zeitpunkt E die Relais R1 18 und R2 19 wieder in Ruhestellung zurückkehren. Somit kann wiederum ein Stromimpuls über den aktivierten Taster 14 an die Stromstoßspule geleitet werden, so dass zum nachfolgenden Zeitpunkt T₁ das Szenario wieder von vorne beginnt.

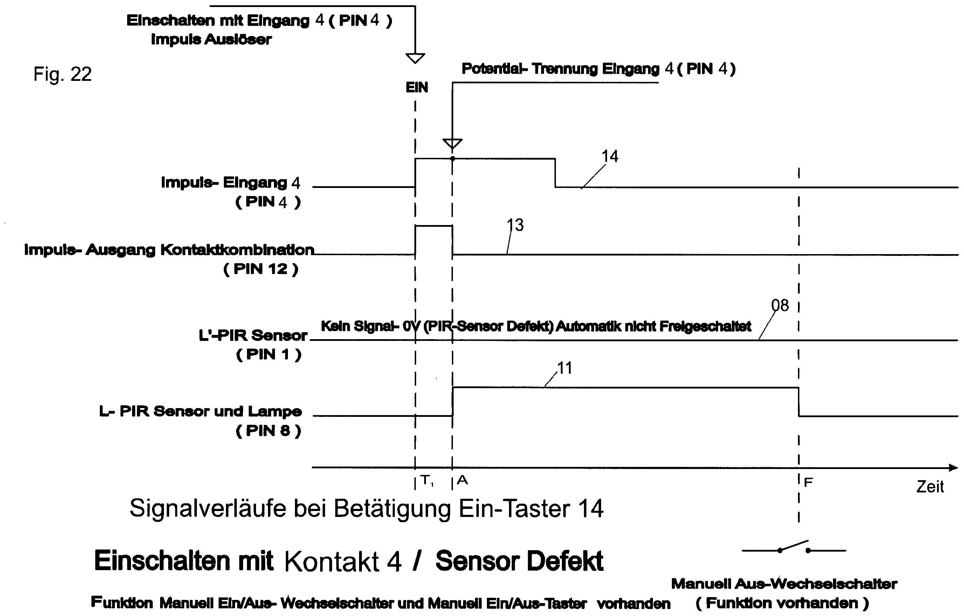

**Fig. 22** erweitert das in **Fig. 21** dargestellte Szenario eines permanent aktivierten Tasters 14, wobei der Sensor 02 defekt ist, so dass seine Schaltphase 08 nicht aktiviert wird. Somit wird am Zeitpunkt A die Verbraucherphase 11 aktiviert, und bleibt solange aktiv, bis z.B. durch Umschalten des Wechselschalters 03 am Zeitpunkt F oder Betätigung des Aus-Tasters 15 oder des Ein-/Aus-Tasters 16 die Schaltung wieder stromlos geschaltet wird.

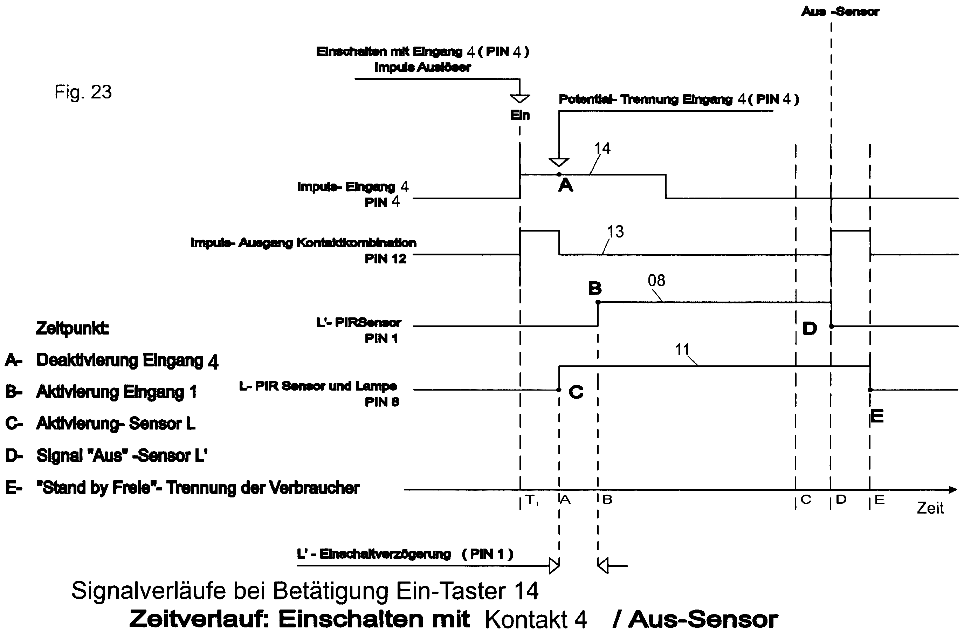

In **Fig. 23** ist ein Zeitverlauf bei Einschalten der Schaltung durch kurze Betätigung des Ein-Tasters 14 und selbständiges Ausschalten durch den Sensor 02 dargestellt. Am Zeitpunkt T₁ wird Taster 14 aktiviert, so dass im Zeitpunkt A nach Umschalten des Stromstoßschalters 04 die Verbraucherphase 11 aktiviert ist. Danach folgen in den Zeitpunkten B bis E das bereits im Zusammenhang mit **Fig. 19** besprochene Schaltszenario.

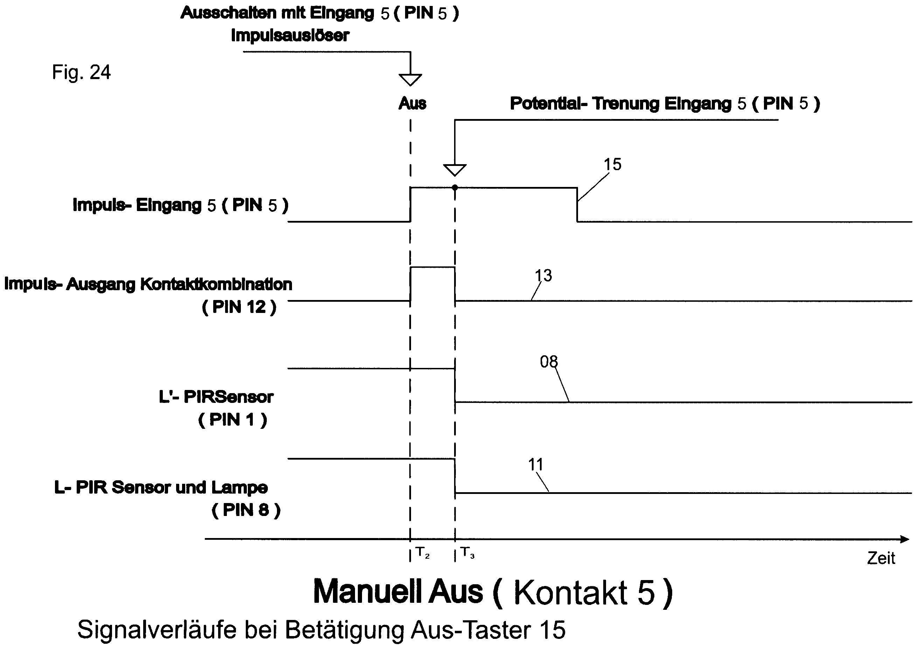

Die in **Fig. 24** dargestellten Zeitverläufe veranschaulichen das Schaltverhalten des Steuermoduls 06 bei Betätigung des Aus-Tasters 15. Am Zeitpunkt T₂ befindet sich die Schaltung im eingeschalteten Zustand und der Sensor 02 hält die Sensorschaltphase 08 aktiv. Wird der Taster 15 betätigt, so wird über den aktivierten Wechselkontakt 20 des Relais R2 19 ein Schaltimpuls an die Schaltphase 13 des Stromstoßschalters 04 über Kontakt 12 des Steuermoduls 06 abgegeben. Das Stromstoßrelais schaltet somit am Zeitpunkt T₃ um und damit die Verbraucherphase 11 und die Schaltung vollständig ab.

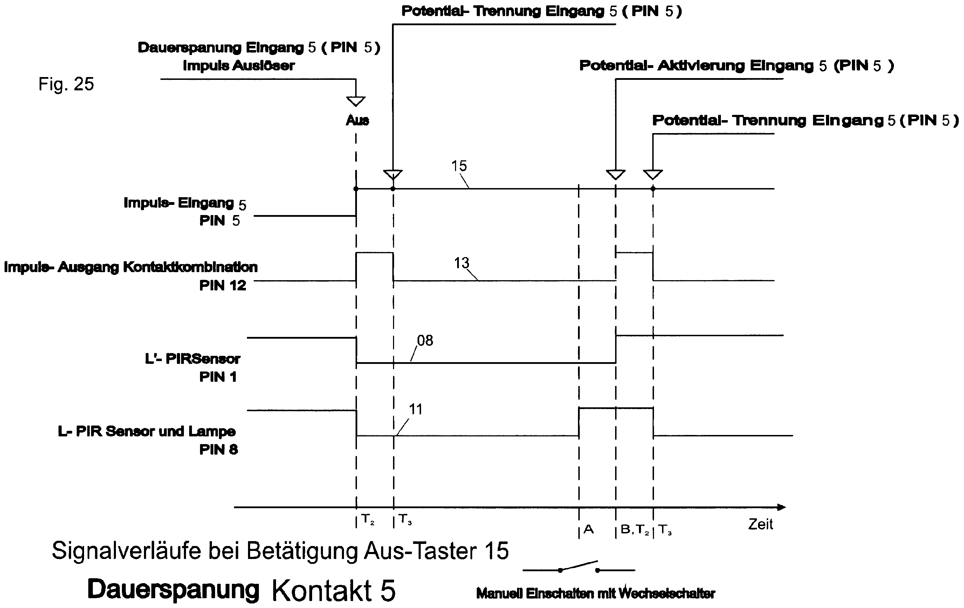

Schließlich zeigt **Fig. 25** ein Schaltszenario beim Ausschalten der Schaltung durch Daueraktivierung des Aus-Tasters 15. Am Zeitpunkt T₂ wird der Taster 15 daueraktiviert, so dass, wie schon in **Fig. 24** dargestellt, die Schaltung nach kurzer Verzögerung am Zeitpunkt T₃ durch Umschalten des Stromstoßschalters 04 abgeschaltet wird. Wird am Zeitpunkt A die Schaltung durch manuelle Betätigung des Wechselschalters 03 wieder eingeschaltet, so wird am Zeitpunkt B die Schaltphase 08 des Sensors 02 aktiviert, damit das Steuermodul 06 in den aktiven Zustand geschaltet und wiederum der Signalweg über Kontakt 5 des Steuermoduls 06 und den Wechselkontakt 20 des Relais R2 zwischen Taster 15 und Stromstoßspule 07 aktiviert, so dass dieser durch den daueraktiven Taster 15 wiederum einen Stromimpuls 13 erhält und den Stromstoßschalter am Zeitpunkt T3 wiederum zum Abschalten der Schaltung bewegt.

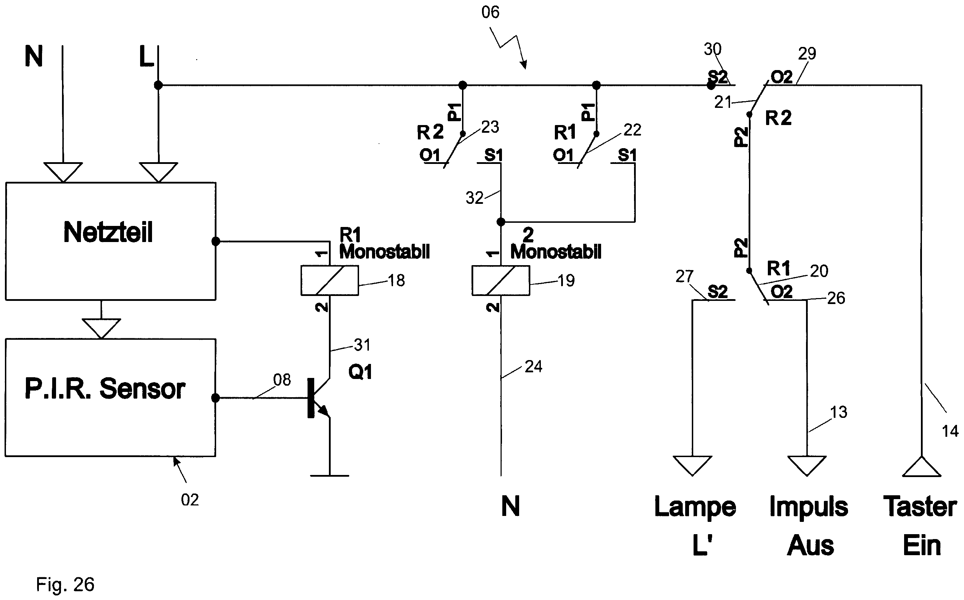

Die **Fig. 26** stellt ein weiteres Ausführungsbeispiel der internen Schaltung eines Steuermoduls 06, der in einem Bewegungssensor 02 integriert ist. Der Sensor 02 umfasst einen PIR-Sensor, der über ein Netzteil mit Kleinspannung betrieben wird und über einen Transistor Q1 direkt das ebenfalls als Kleinspannungsrelais ausgeführte Relais R1 18 schaltet. Das 230V Relais R2 19 wird durch Relais R1 18 aktiviert und hält sich durch Einschaltkontakt 23 selbst. Die potentialfreien in Reihe geschalteten Wechselkontakte 21, 21 der beiden Relais bewirken eine direkte Ansteuerung der Lampe L' und geben über die Spulenphase 13 einen Impuls an einen angeschlossenen Stromstoßwechselschalter 04 (nicht dargestellt) ab. Ein angeschlossener Taster 14 kann im ausgeschalteten Zustand durch Betätigung manuell einen Einschaltimpuls auf die Spulenphase 13 abgeben.

Eine umfangreiche vergleichende Feldstudie betreffend eine Beleuchtungsinstallation eines Wasch- und Toilettenbereichs innerhalb einer Fabrikanlage bei üblicher Nutzung zwischen einer herkömmlichen Lichtschalterinstallation, einer herkömmlichen Bewegungsmelderinstallation und einer erfindungsgemäßen Bewegungsmelderschaltung hat ergeben, dass durch Einsatz der erfindungsgemäßen Bewegungsmelderschaltung gegenüber der Lichtschalterinstallation eine Stromverbrauchsersparnis von über 90% und gegenüber der herkömmlichen Bewegungsmelderinstallation eine Stromverbrauchsersparnis von über 70% erzielt werden konnte. Die wesentlichen Gründe der Ersparnis liegen in der Selbstabschaltfähigkeit der erfindungsgemäßen Schaltung, die in Todzeiten keinerlei Strom verbraucht. Im Falle der herkömmlichen Bewegungsmelderschaltung wurde in den inaktiven Zeiten mittels einer Notbeleuchtung der Raum dauerhaft schwach beleuchtet, was die Verbrauchswerte negativ beeinflusste.

### Bezugszeichenliste

- 01: Wechselschaltung
- 02: Bewegungsmelder
- 03: Wechselschalter
- 04: Stromstoß-Wechselschalter
- 05: Verbraucher
- 06: Steuermodul
- 07: Stromstoßspule
- 08: Sensorschaltphase
- 09: Spannungsversorgung - Phase L - Netzphase
- 10: Nullleiter
- 11: Verbraucherphase
- 12: Sensornetzphase
- 13: Schaltphase der Stromstoßspule
- 14: Ein-Taster
- 15: Aus-Taster
- 16: Ein-/Aus-Taster
- 17: Schaltkreis des Steuermoduls
- 18: Schaltrelais R1
- 19: Schaltrelais R2
- 20: Wechselkontakt von R1
- 21: Wechselkontakt von R2
- 22: Einschaltkontakt von R1
- 23: Einschaltkontakt von R2
- 24: Erster Spulenkontakt von R1 & R2
- 25: Eingangskontakt des Wechselkontakts von R1
- 26: Erster Ausgangskontakt des Wechselkontakts von R1
- 27: Zweiter Ausgangskontakt des Wechselkontakts von R1
- 28: Eingangskontakt des Wechselkontakts von R2
- 29: Erster Ausgangskontakt des Wechselkontakts von R2
- 30: Zweiter Ausgangskontakt des Wechselkontakts von R2
- 31: Zweiter Spulenkontakt von R1
- 32: Zweiter Spulenkontakt von R2
- 33: Verbraucher
- 34: Nachlaufrelais
- 35: Kommunikationsmodul
- 36: Schaltrelais R1' des Kommunkationsmoduls
- 37: Schaltrelais R2' des Kommunkationsmoduls
- 38: Einschaltkontakte des Schaltrelais R1'
- 39: Einschaltkontakte des Schaltrelais R2'
- 40: Kontrollampe LMP1
- 41: Kontrollampe LMP2
- 42: Externer Stromstoßschalter

## Patentansprüche

1. Stromsparende Sensorschaltung, zumindest umfassend einen Sensor, einen manuell betätigbaren Schalter (03) oder Taster (16), einen bistabilen Stromstoßschalter (04, 42) und mindestens einen an einer Verbraucherphase (11) angeschlossenen Verbraucher (05, 33), wobei der Verbraucher über den Stromstoßschalter (04,42) zumindest ausgeschaltet werden kann und wobei der Sensor nach Einschalten einer Sensornetzphase (12) eine Sensorschaltphase (08) einschaltet und nach Feststellung keines sensorauslösenden Ereignisses über einen vorbestimmbaren Zeitraum die Sensorschaltphase (08) wieder abschaltet, **dadurch gekennzeichnet dadurch**,
dass die Schaltung des weiteren ein Steuermodul (06) umfasst, dass verbraucherphasenseitig (11) angeschlossen ist, wobei an dem Steuermodul (06) der Sensor mit Sensornetzphase (12) und Sensorschaltphase (08) sowie die Stromstoßspule (07) des Stromstoßschalters (04, 42) angeschlossen sind, und wobei eine Betätigung des Schalters (03) oder Tasters (16) eine Spannungsversorgung sowohl des Verbrauchers (05, 33), des Steuermoduls (06) und des Sensor mit bewirkt, wonach der Sensor nach Feststellung keines sensorauslösenden Ereignisses über eine vorbestimmbare Zeit ein Abschalten der Sensorschaltphase (08) an das Steuermodul (06) signalisiert, wodurch das Steuermodul (06) den Stromstoßschalter (04, 42) durch Abgabe eines Schaltimpulses an die Stromstoßspule (07) betätigt, so dass die Verbraucherphase (11) abgeschaltet wird und somit Verbraucher (05), Steuermodul (06) und Sensor von der Spannungsversorgung (08) getrennt werden.

2. Schaltung nach Anspruch 1,
**dadurch gekennzeichnet,**
**dass** der manuell betätigbare Schalter (03) ein netzphasenseitig angeschlossener Wechselschalter (03) und der Stromstoßschalter (04) ein verbraucherphasenseitig angeschlossener Stromstoß-Wechselschalter ist, die zusammen als gewöhnliche Wechselschaltung (01) geschaltet sind.

3. Schaltung nach einem der vorhergehenden Ansprüche,
**dadurch gekennzeichnet,**
**dass** der manuell betätigbare Taster (16) direkt mit der Stromstoßspule des Stromstoßschalters (04, 42) und der Netzphase (09) verbunden ist.

4. Schaltung nach einem der vorhergehenden Ansprüche,
**dadurch gekennzeichnet,**
**dass** der Sensor ein Bewegungsmelder (02), insbesondere ein PIR-Sensor (Passiv-Infrarot-Sensor), ein Rauchmelder bzw. Geruchssensor, ein Geschmackssensor bzw. eine chemische Sonde, ein Temperatursensor oder ein Feuchte- oder Windsensor ist.

5. Schaltung nach einem der vorhergehenden Ansprüche,
**dadurch gekennzeichnet,**
**dass** das Steuermodul (06) zumindest Eingangskontakte für den N-Leiter (10), die Verbraucherphase (11) sowie die Sensorschaltphase (08), sowie zumindest Ausgangskontakte für die Sensornetzphase (12) und Schaltphase der Stromstoßspule umfasst.

6. Schaltung nach Anspruch 5,
**dadurch gekennzeichnet,**
**dass** das Steuermodul (06) des weiteren Eingangskontakte für Eintaster (14, 15, 16) zum Ein-, Aus- und Ein/Aus-Tasten des Verbrauchers aufweist

7. Schaltung nach einem der vorhergehenden Ansprüche,
**dadurch gekennzeichnet,**
**dass** das Steuermodul (06) einen Schaltkreis (17) mit rein elektromechanischen Bauteilen wie Relais, Schütze, Stromstoßschalter umfasst.

8. Schaltung nach Anspruch 7,
**dadurch gekennzeichnet,**
**dass** der Schaltkreis (17) zwei monostabile Schaltrelais R1, R2 (18, 19) mit jeweils zumindest einem potentialfreiem Wechselkontakt (20, 21) und einem Einschaltkontakt (22, 23) umfasst, wobei jeweils ein erster Spulenkontakt (24) jedes Relais mit dem Nullleiter (10) verbunden ist, und wobei im Ruhezustand von R1, R2 (18, 19) der Einschaltkontakt (22, 23) geöffnet und der Eingangskontakt (25, 28) des Wechselkontaktes (20, 21) mit einem ersten Ausgangskontakt (26, 29) des Wechselkontakts (22, 23) verbunden ist..

9. Schaltung nach Anspruch 8,
**dadurch gekennzeichnet,**
**dass** ein zweiter Ausgangskontakt (30) des Wechselkontakts (21) von R2 (19) mit der Verbraucherphase (11) verbunden ist, der Eingangskontakt (28) des Wechselkontakts (21) von R2 (19) mit einem ersten Ausgangskontakt (26) des Wechselkontakts (20) von R1 (18) verbunden ist, und der Eingangskontakt (25) des Wechselkontakts (20) von R1 (18) mit der Stromstoßspule (07) als Schaltphase (13) des Stromstoßschalters (04) verbunden ist.

10. Schaltung nach einem der Ansprüche 8 oder 9,
**dadurch gekennzeichnet,**
**dass** der zweite Spulenkontakt (31) von R1 (18) mit der Sensorschaltphase (08) sowie der zweite Spulenkontakt (32) von R2 (19) über die parallel geschalteten als Selbsthaltung fungierenden Einschaltkontakte (22, 23) von R1 (18) und R2 (19) mit der Verbraucherphase (11) verbunden sind.

11. Schaltung nach einem der Ansprüche 8 bis 10,
**dadurch gekennzeichnet,**
**dass** der erste Ausgangskontakt (29) des Wechselkontakts (21) von R2 (19) über einen Eintaster (14) mit der Netzphase (09) verbindbar ist, der bei Betätigung eine Einschaltung des Verbrauchers (05) bewirkt.

12. Schaltung nach einem der Ansprüche 8 bis 11,
**dadurch gekennzeichnet,**
**dass** der zweite Ausgangskontakt (27) des Wechselkontakts (20) von R1 (18) über einen Eintaster (15) mit der Netzphase (09) verbindbar ist, der bei Betätigung eine Ausschaltung des Verbrauchers (05) bewirkt.

13. Schaltung nach einem der Ansprüche 8 bis 12,
**dadurch gekennzeichnet,**
**dass** der Eingangskontakt (25) des Wechselkontakts (20) von R1 (18) über einen Eintaster (16) mit der Netzphase (09) verbindbar ist, der bei Betätigung eine Ein-/Ausschaltung des Verbrauchers (05) bewirkt.

14. Schaltung nach einem der Ansprüche 8 bis 13,
**dadurch gekennzeichnet,**
**dass** der Einschaltkontakt (22) von R1 als Wechselkontakt ausgeführt ist, wobei im Ruhezustand des Einschaltkontakts (22) eine Kontrolllampe KMP1 (40) leuchtet, die anzeigt, dass der Sensor nicht aktiviert ist.

15. Schaltung nach einem der vorhergehenden Ansprüche,
**dadurch gekennzeichnet,**
**dass** in der Sensorschaltphase (08) ein Zeitrelais als Nachlaufrelais (34) eingeschaltet ist.

## Claims

1. Energy-efficient sensor circuit, comprising at least a sensor, a manually operable switch (03) or button (16), a bistable impulse switch (04, 42), and at least one load (05, 33) connected to a load phase (11), wherein the load can at least be switched off via the impulse switch (04, 42) and wherein, once a sensor mains phase (12) has been switched on, the sensor switches on a sensor switching phase (08) and, once no sensor-triggering event has been detected for a predeterminable period, switches the sensor switching phase (08) off again,
**characterized in that**
the circuit further comprises a control module (06) which is connected to the load phase (11), the sensor with the sensor mains phase (12) and with the sensor switching phase (08) and the impulse coil (07) of the impulse switch (04, 42) being connected to the control module (06), and operation of the switch (03) or button (16) causing the load (05, 33), the control module (06) and the sensor to be supplied with power, whereafter, once no sensor-triggering event has been detected for a predeterminable period, the sensor signals the control module (06) to switch off the sensor switching phase (08), which causes the control module (06) to operate the impulse switch (04, 42) by transmitting a switching impulse to the impulse coil (07), causing the load phase (11) to be switched off and the load (05), the control module (06), and the sensor to thus be disconnected from the power supply (08).

2. The circuit according to claim 1,
**characterized in that**
the manually operable switch (03) is a double-throw switch (03) connected to the mains-phase, and the impulse switch (04) is an impulse double-throw switch connected to the load phase, both switches together being connected as a conventional multi-way circuit (01).

3. The circuit according to any one of the preceding claims,
**characterized in that**
the manually operable button (16) is connected directly to the impulse coil of the impulse switch (04, 42) and to the mains phase (09).

4. The circuit according to any one of the preceding claims,
**characterized in that**
the sensor is a motion sensor (02), in particular a PIR (passive infrared) sensor, a smoke or odor detector, a taste sensor or chemical probe, a temperature sensor, or a humidity or wind sensor.

5. The circuit according to any one of the preceding claims,
**characterized in that**
the control module (06) comprises at least input contacts for the N conductor (10), the load phase (11), and the sensor switching phase (08), and at least output contacts for the sensor mains phase (12) and the switching phase of the impulse coil.

6. The circuit according to claim 5,
**characterized in that**
the control module (06) further has input contacts for on-buttons (14, 15, 16) for switching the load on, off, and on/off.

7. The circuit according to any one of the preceding claims,
**characterized in that**
the control module (06) comprises a circuit (17) having purely electromechanical components such as relays, contactors, impulse switches.

8. The circuit according to claim 7,
**characterized in that**
the circuit (17) comprises to monostable switching relays R1, R2 (18, 19) each having at least a floating changeover contact (20, 21) and a switch-on contact (22, 23), a first coil contact (24) of each relay being connected to the neutral conductor (10), and the switch-on contact (22, 23) being open and the input contact (25, 28) of the changeover contact (20, 21) being connected to the first output contact (26, 29) of the changeover contact (22, 23) when R1, R2 (18, 19) are in the normal position.

9. The circuit according to claim 8,
**characterized in that**
a second output contact (30) of the changeover contact (21) of R2 (19) is connected to the load phase (11), the input contact (28) of the changeover contact (21) of R2 (19) is connected to a first output contact (26) of the changeover contact (20) of R1 (18), and the input contact (25) of the changeover contact (20) of R1 (18) is connected to the impulse coil (07) as a switching phase (13) of the impulse switch (04).

10. The circuit according to any one of claims 8 or 9,
**characterized in that**
the second coil contact (31) of R1 (18) is connected to the sensor switching phase (08) and the second coil contact (32) of R2 (19) is connected to the load phase (11) via the switch-on contacts (22, 23) of R1 (18) and R2 (19), which are connected in parallel and function as a self-hold.

11. The circuit according to any one of claims 8 to 10,
**characterized in that**
the first output contact (29) of the changeover contact (21) of R2 (19) can be connected to the mains phase (09) via an on-button (14) which, when operated, causes the load (05) to be switched on.

12. The circuit according to any one of claims 8 to 11,
**characterized in that**
the second output contact (27) of the changeover contact (20) of R1 (18) can be connected to the mains phase (09) via an on-button (15) which, when operated, causes the load (05) to be switched off.

13. The circuit according to any one of claims 8 to 12,
**characterized in that**
the input contact (25) of the changeover contact (20) of R1 (18) can be connected to the mains phase (09) via an on-button (16) which, when operated, causes the load (05) to be switched on/off.

14. The circuit according to any one of claims 8 to 13,
**characterized in that**
the switch-on contact (22) of R1 is configured as a changeover contact, an indicator lamp KMP1 (40) indicating that the sensor is not activated being on when the switch-on contact (22) is in the normal position.

15. The circuit according to any one of the preceding claims,
**characterized in that**
a time relay is connected into the sensor switching phase (08) as a relay (34) with switch-off delay.

## Revendications

1. Circuit de capteur à économie d'énergie, comprenant au moins un capteur, un commutateur (03) ou bouton (16) à actionnement manuel, un télérupteur (04, 42) bistable et au moins un consommateur (05, 33) connecté à une phase (11) de consommateur, le consommateur pouvant au moins être arrêté par le télérupteur (04, 42) et le capteur mettant en marche une phase (08) de commutation de capteur après la mise en marche d'une phase (12) secteur de capteur et arrêtant la phase (08) de commutation de capteur si aucun événement déclenchant le capteur n'est détecté pendant une durée prédéterminable,
**caractérisé en ce que**
le circuit comprend en outre un module de commande (06) qui est connecté à la phase (11) de consommateur, le capteur avec la phase (12) secteur de capteur et la phase (08) de commutation de capteur ainsi que la bobine (07) du télérupteur (04, 42) étant connectés au module de commande (06), et un actionnement du commutateur (03) ou du bouton (16) faisant que le consommateur (05, 33), le module de commande (06) et le capteur sont alimentés en électricité, après quoi le capteur, après n'avoir détecté aucun événement déclenchant le capteur pendant une durée prédéterminable, signale un arrêt de la phase (08) de commutation de capteur au module de commande (06), ce qui fait que le module de commande (06) actionne le télérupteur (04, 42) en transmettant une impulsion de commutation à la bobine (07) du télérupteur de sorte que la phase (11) de consommateur est arrêtée et, par conséquent, le consommateur (05), le module de commande (06) et le capteur sont déconnectés de l'alimentation électrique (08).

2. Circuit selon la revendication 1,
**caractérisé en ce que**
le commutateur (03) à actionnement manuel est un inverseur (03) connecté à la phase secteur et le télérupteur (04) est un inverseur à impulsion connecté à la phase de consommateur, qui sont connectés ensemble comme circuit va-et-vient (01) ordinaire.

3. Circuit selon l'une quelconque des revendications précédentes,
**caractérisé en ce que**
le bouton (15) à actionnement manuel est connecté directement à la bobine du télérupteur (04, 42) et à la phase secteur (09).

4. Circuit selon l'une quelconque des revendications précédentes,
**caractérisé en ce que**
le capteur est un détecteur de mouvement (02), notamment un capteur IRP (infrarouge passif), un détecteur de fumée ou un détecteur d'odeur, un détecteur de goût ou un détecteur chimique, un capteur de température ou un capteur d'humidité ou de vent.

5. Circuit selon l'une quelconque des revendications précédentes,
**caractérisé en ce que**
le module de commande (06) comprend au moins des contacts d'entrée pour le conducteur N (10), la phase (11) de consommateur et la phase (08) de commutation de capteur ainsi qu'au moins des contacts de sortie pour la phase (12) secteur de capteur et la phase de commutation de la bobine du télérupteur.

6. Circuit selon la revendication 5,
**caractérisé en ce que**
le module de commande (06) comprend en outre des contacts d'entrée pour des boutons de marche (14, 15, 16) pour mettre en marche, arrêter, et mettre en marche/arrêter le consommateur.

7. Circuit selon l'une quelconque des revendications précédentes,
**caractérisé en ce que**
le module de commande (06) comprend un circuit (17) comportant des composants purement électromécaniques tels que des relais, des contacteurs, des télérupteurs.

8. Circuit selon la revendication 7,
**caractérisé en ce que**
le circuit (17) comprend deux relais monostables R1, R2 (18, 19) chacun ayant au moins un contact inverseur (20, 21) sans potentiel et un contact (22, 23) de mise en marche, un premier contact (24) de bobine de chaque relais étant connecté au conducteur neutre (10), et le contact (22, 23) de mise en marche étant ouvert et le contact d'entrée (25, 28) du contact inverseur (20, 21) étant connecté au premier contact de sortie (26, 29) du contact inverseur (22, 23) quand R1, R2 (18, 19) sont au repos.

9. Circuit selon la revendication 8,
**caractérisé en ce qu'**
un deuxième contact de sortie (30) du contact inverseur (21) de R2 (19) est connecté à la phase (11) de consommateur, le contact d'entrée (28) du contact inverseur (21) de R2 (19) est connecté à un premier contact de sortie (26) du contact inverseur (20) de R1 (18), et le contact d'entrée (25) du contact inverseur (20) de R1 (18) est connecté à la bobine (07) comme phase (13) de commutation du télérupteur (04).

10. Circuit selon l'une quelconque des revendications 8 ou 9,
**caractérisé en ce que**
le deuxième contact de bobine (31) de R1 (18) est connecté à la phase (08) secteur de capteur et le deuxième contact de bobine (32) de R2 (19) est connecté à la phase (11) de consommateur par les contacts (22, 23) de marche de R1 (18) et R2 (19) qui sont connectés en parallèle et fonctionnent comme autoentretien.

11. Circuit selon l'une quelconque des revendications 8 à 10,
**caractérisé en ce que**
le premier contact de sortie (29) du contact inverseur (21) de R2 (19) peut être connecté à la phase secteur (09) par un bouton de marche (14) dont l'actionnement fait que le consommateur (05) est mis en marche.

12. Circuit selon l'une quelconque des revendications 8 à 11.
**caractérisé en ce que**
le deuxième contact de sortie (27) du contact inverseur (20) de R1 (18) peut être connecté à la phase secteur (09) par un bouton (15) de marche dont l'actionnement fait que le consommateur (05) est arrêté.

13. Circuit selon l'une quelconque des revendications 8 à 12,
**caractérisé en ce que**
le contact d'entrée (25) du contact inverseur (20) de R1 (18) peut être connecté à la phase secteur (09) par un bouton (16) de marche dont l'actionnement fait que le consommateur (05) est mis en marche/arrêté.

14. Circuit selon l'une quelconque des revendications 8 à 13,
**caractérisé en ce que**
le contact (22) de mise en marche de R1 est configuré comme contact inverseur, un voyant de contrôle KMP1 (40) indiquant que le capteur n'est pas activé étant allumé quand le contact (22) de mise en marche est au repos.

15. Circuit selon l'une quelconque des revendications précédentes,
**caractérisé en ce qu'**
un relais temporisé est connecté dans la phase (08) de commutation de capteur comme relais (34) temporisé au repos.
